# EUROPÄISCHE PATENTANMELDUNG

(11) **EP 4 286 144 A1**
(43) Veröffentlichungstag der Anmeldung: **06.12.2023**
(21) Anmeldenummer: 23170716.7
(22) Anmeldetag: 28.04.2023
(51) Int. Cl.: B29C 71/00, B29C 71/02, B29C 64/35, B33Y 40/20

(54) **VERFAHREN ZUR BEHANDLUNG EINER OBERFLÄCHE EINES FORMTEILS**

(30) Priorität: 03.06.2022 DE 102022114194
(71) Anmelder: DyeMansion GmbH, 82152 Planegg (DE)
(72) Erfinder: Herz, Fabian, 82335 Berg (DE); Berchtold, Alex, 82152 Planegg (DE); Rosenfeld, Alisa, 82131 Stockdorf (DE)
(74) Vertreter: 2s-ip Schramm Schneider Bertagnoll Patent- und Rechtsanwälte Part mbB

(57) **Zusammenfassung**

Bereitgestellt wird ein Verfahren zur Behandlung einer Oberfläche (O) eines unter Verwendung eines mit zumindest einem Zuschlagstoff (Z) versehenen Polymers (P) hergestellten Formteils (10), wobei die Oberfläche (O) des Formteils (10) für einen ersten Zeitraum in Kontakt mit einem eine erste Temperatur aufweisenden zuschlagstoffaktiven Mittel gebracht wird, wobei das zuschlagstoffaktive Mittel angepasst ist, während des Inkontaktbringens mit der Oberfläche den an der Oberfläche (O) des Formteils (10) vorhandenen Zuschlagstoff (Z) zumindest teilweise von der Oberfläche (O) zu entfernen. Bereitgestelle wird ferner ein mit dem erfindungsgemäßen Verfahren behandeltes Formteil (10).

## Beschreibung

### Gebiet der Erfindung

Die Erfindung betrifft ein Verfahren zur Behandlung einer Oberfläche eines Formteils, wobei das Formteil vorzugsweise in einem 3D-Druckverfahren hergestellt wird bzw. hergestellt wurde.

### Hintergrund der Erfindung

Es ist bekannt, Formteile aus Kunststoff (etwa einem Polymer) in einem additiven Fertigungsverfahren bzw. in einem 3D-Druckverfahren, etwa dem selektiven Lasersintern (SLS) herzustellen. Weitere aus dem Stand der Technik bekannte 3D-Druckverfahren sind auf Infrarotstrahlung basierende Verfahren, etwa das Multi-Jet Fusion (MJF) Verfahren, das High Speed Sintern (HSS) und das Selective Absorption Fusion (SAF) Verfahren. Das ebenfalls aus dem Stand der Technik bekannte Laser-Pro-Fusion Verfahren basiert auf Lasern statt auf Infrarotstrahlung. Weitere aus dem Stand der Technik bekannte 3D-Druckverfahren zum Herstellen von Formteilen basieren etwa auf Extrudierverfahren, wie die Fast-Filament-Fabrication (FFF), Fused-Deposition-Molding (FDM) und Fused Granular Fabrication (FGF) Verfahren. Mit den genannten Verfahren wird das herzustellende Formteil schichtweise aufgebaut.

Die Herstellung solcher Formteile aus einem Kunststoff in einem 3D-Druckverfahren hat den Nachteil, dass die Oberfläche der Formteile rau bzw. porös ist und oftmals industriellen Anforderungen an die Oberflächengüte nicht genügt. Die Formteile können aufgrund ihrer rauen Oberfläche einem erhöhten Verschleiß unterliegen. Andererseits kann aufgrund der porösen Oberflächenstruktur Schmutz leicht an der Oberfläche haften bleiben. Die Ästhetik und Haptik des Formteils können so erheblich beeinträchtigt werden.

Es ist ferner bekannt, Druckmaterialien (etwa Polymere) mit anderen Zusatzstoffen bzw. Zuschlagstoffen zu kombinieren, um die ästhetischen, mechanischen oder funktionalen Eigenschaften der Formteile zu beeinflussen, um die Kosten zu senken oder die Druckeigenschaften zu verbessern. Solche Zuschlagstoffe können beispielsweise natürliche und synthetische Polymere, Keramiken, Talke, Quarze, Metalle, Stahl, Legierungen, Gläser, Mineralien, Farbstoffe, Gummis, Holz, Graphit, Aktivkohle, Carbon, Farbstoffe, Ruß und Kombinationen hiervon umfassen. Vorzugsweise kann der Zuschlagstoff eine Ausgestaltung haben, die ausgewählt ist aus der Gruppe, bestehend aus Pulver, Puder, Mehl, Granulate, Körner, Kugel, Partikel, Fasern, Partikelagglomerate, anderen Schüttguten, Kern-Schale-Strukturen und Kombinationen hiervon.

Mit den genannten Druckverfahren können Formteile aus einem oder mehrere Zuschlagstoffe aufweisenden Druckmaterial hergestellt werden. Die Zuschlagstoffe können hierbei in dem Formteil und an der Oberfläche des Formteils vorzugsweise homogen verteilt sein. Sie können aber auch inhomogen verteilt sein, und insbesondere hinsichtlich Größe und Geometrie sowie dem Abstand zueinander variieren. Das bedeutet, dass die Zuschlagstoffe an der Oberfläche des hergestellten Formteils sichtbar (mit dem bloßen Auge oder unter dem Mikroskop) sein können bzw. offenbart sein können. Bei der Verwendung eines Metalls als Zuschlagstoff kann die Oberfläche des hergestellten Formteils Bereiche aus dem Metall aufweisen.

Auch die Herstellung von Formteilen aus einem einen Zuschlagstoff aufweisenden Kunststoff in einem 3D-Druckverfahren hat den Nachteil, dass die Oberfläche der Formteile rau bzw. porös, also nicht geschlossen (versiegelt), ist. Die Formteile können also auch hier einerseits einem erhöhten Verschleiß unterliegen und andererseits kann durch die poröse, nicht geschlossene Oberflächenstruktur Schmutz leicht an der Oberfläche haften. Die Ästhetik des Gegenstandes kann so erheblich beeinträchtigt werden. Darüber hinaus kann die poröse Oberfläche der Formteile die Haptik negativ beeinflussen. Ferner können die Formteile je nach verwendetem Druckmaterial Wasser bzw. Feuchtigkeit aufnehmen, was die Struktur und/oder die Festigkeit bzw. Stabilität der Formteile negativ beeinflussen kann, oder die Formteile in ihrer Funktionalität beeinträchtigen kann. Die Funktionalität der Formteile wird auch durch die auf die oberflächennahe Feststoffpartikel zurückzuführende erhöhte Oberflächenrauheit beeinflusst. Außerdem können mit einem solchen Formteil gewisse Verwendungszwecke nicht realisiert werden. Insbesondere die Verwendung von in einem 3D-Druckverfahren hergestellten Formteilen als Form z.B. für das Tiefziehen, den Vakuumspritzguss u.ä. ist dadurch nicht möglich.

Um die poröse Oberfläche von solchen Formteilen zumindest teilweise zu beseitigen, ist es im Stand der Technik bekannt, die Oberfläche der Formteile zu schleifen und/oder zu polieren. Damit kann die Oberfläche der Formteile zwar glatter ausgestaltet werden. Allerdings ist ein weitgehendes Beseitigen der Poren nur mit erheblichem Aufwand möglich, sodass in der Regel auch nach dem Polieren nicht sichergestellt ist, dass kein Schmutz an der Oberfläche haften bleibt. Hinzu kommt, dass auch mit einem Polieren die gewünschte Verminderung der Rauheit nicht immer erreicht werden kann.

Ferner ist ein Polieren der Oberfläche nicht in jedem Fall möglich. Denn beim Polieren (wie auch beim Schleifen) wird Material von der Oberfläche des Formteils abgetragen, was zu einer unerwünschten Veränderung der Geometrie des Formteils führen kann. Ein weiterer Nachteil des Polierens besteht darin, dass nicht sichergestellt werden kann, dass die Oberfläche nach dem Polieren fluidabweisend, insbesondere wasserabweisend, und vorzugswese wasserdicht ist. Je nach verwendetem Material bei der Herstellung solcher Formteile ist es jedoch erforderlich, dass die Oberfläche zumindest weitgehend wasserabweisend bzw. wasserdicht ist. Ferner wird das Polieren umso aufwendiger, je komplexer die Geometrie vom Formteil wird.

Ferner ist es bekannt Oberflächen von in einem 3D-Druckverfahren hergestellten Formteilen zu lackieren. Beim Lackieren der Formteile wird eine Lackschicht auf die Oberfläche der Formteile aufgebracht. Da eine solche Lackschicht lediglich an der Oberfläche des Formteils haftet, kann die Lackschicht leicht abplatzen. Nachteilig hierbei ist ferner, dass es zu einem teils erheblichen Materialauftrag an der Oberfläche des Formteils kommen kann, was zu einer unerwünschten Geometrieänderung des Formteils führen kann.

Um die poröse Oberfläche zumindest teilweise zu beseitigen, ist es im Stand der Technik, etwa aus der DE 10 2018 002 401 A1, auch bekannt, die Oberfläche von Kunststoffformteilen chemisch zu glätten. Allerdings wird auch beim chemischen Glätten die erwünschte Reduzierung der Rauheit der Oberfläche nicht immer erreicht. Besonders bei einen Zuschlagstoff, etwa ein Metall, aufweisenden Kunststoffformteilen hat es sich gezeigt, dass die Rauheit nach dem chemischen Glätten etwa gleich bleibt oder sogar zunimmt anstatt abzunehmen.

### Aufgabe der Erfindung

Aufgabe der vorliegenden Erfindung ist es daher, ein Verfahren bereitzustellen, mit dem die Oberfläche von mit einen Zuschlagstoff aufweisenden Kunststoff hergestellten Formteilen geglättet und gegebenenfalls versiegelt werden kann.

### Erfindungsgemäße Lösung

Gelöst wird diese Aufgabe durch ein Verfahren zur Behandlung einer Oberfläche eines unter Verwendung eines mit zumindest einem Zuschlagstoff versehenen Polymers hergestellten Formteils gemäß dem unabhängigen Patentanspruch. Vorteilhafte Ausgestaltungen des Verfahrens sind in den abhängigen Patentansprüchen angegeben.

Bereitgestellt wird demnach ein Verfahren zur Behandlung einer Oberfläche eines unter Verwendung eines mit zumindest einem Zuschlagstoff versehenen Polymers hergestellten Formteils, wobei die Oberfläche des Formteils für einen ersten Zeitraum in Kontakt mit einem eine erste Temperatur aufweisenden zuschlagstoffaktiven Mittel gebracht wird, wobei das zuschlagstoffaktive Mittel angepasst ist, während des Inkontaktbringens mit der Oberfläche den an der Oberfläche des Formteils vorhandenen Zuschlagstoff zumindest teilweise von der Oberfläche zu entfernen.

Vorteilhaft kann es sein, wenn die Oberfläche des Formteils für einen zweiten Zeitraum in Kontakt mit einem eine zweite Temperatur aufweisenden polymeraktiven Mittel gebracht wird, wobei das polymeraktive Mittel angepasst ist, während des Inkontaktbringens mit der Oberfläche das Polymer aufweisende Oberflächenbereiche zumindest teilweise anzulösen oder quellen zu lassen, und wobei die Oberfläche des Formteils durch das Inkontaktbringen mit dem zuschlagstoffaktiven Mittel und mit dem polymeraktiven Mittel zumindest abschnittsweise (weiter) geglättet wird.

Vorteilhaft kann es sein, wenn das zuschlagstoffaktive Mittel angepasst ist, den an der Oberfläche des Formteils vorhandenen Zuschlagstoff zumindest anteilig chemisch umzuwandeln und/oder in Lösung zu bringen, wobei der chemisch umgewandelte und/oder in Lösung gebrachte Anteil des Zuschlagstoffes von der Oberfläche des Formteils entfernt wird.

Als zuschlagstoffaktives Mittel kann in einer Ausgestaltung der Erfindung ein Ätzmittel verwendet werden.

In einer Ausgestaltung der Erfindung kann es vorteilhaft sein, wenn als zuschlagstoffaktives Mittel ein Ätzmittel verwendet wird, das angepasst ist, den an der Oberfläche des Formteils vorhandenen Zuschlagstoff zumindest anteilig chemisch umzuwandeln und/oder in Lösung zu bringen, wobei der chemisch umgewandelte und/oder in Lösung gebrachte Anteil des Zuschlagstoffes von der Oberfläche des Formteils entfernt wird.

Vorteilhaft kann es sein, wenn als polymeraktives Mittel ein Lösungsmittel verwendet wird, das angepasst ist, die das Polymer aufweisenden Oberflächenbereiche der Oberfläche zumindest soweit anzulösen oder quellen zu lassen, dass das angelöste oder gequollene Polymer zumindest teilweise in jene Oberflächenbereiche migriert, in denen der an der Oberfläche des Formteils vorhandene Zuschlagstoff zumindest anteilig entfernt worden ist.

Vorteilhaft kann es sein, wenn das zuschlagstoffaktive Mittel so gewählt wird, dass das Polymer gegenüber dem zuschlagstoffaktiven Mittel stabiler ist als der Zuschlagstoff.

Vorteilhaft kann es sein, wenn das polymeraktive Mittel so gewählt wird, dass der Zuschlagstoff gegenüber dem polymeraktiven Mittel stabiler ist als das Polymer.

Vorteilhaft kann es sein, wenn das zuschlagstoffaktive Mittel als zuschlagstoffaktives Gemisch in Kontakt mit der Oberfläche gebracht wird, wobei das zuschlagstoffaktive Gemisch mindestens ein Trägermedium, vorzugsweise ein Lösungsmittel, und das zuschlagstoffaktive Mittel umfasst.

Vorteilhaft kann es sein, wenn
- das Lösungsmittel vorzugsweise Wasser umfasst und das zuschlagstoffaktive Mittel bzw. das Ätzmittel zumindest teilweise in die Lösung geht, und/oder
- der Anteil des zuschlagstoffaktiven Mittels in dem zuschlagstoffaktiven Gemisch vorzugsweise 1 bis 90 Gew.-%, bevorzugt 10 bis 60 Gew.-%, jeweils bezogen auf das Gesamtgewicht des zuschlagstoffaktiven Gemischs, beträgt.

Vorteilhaft kann es sein, wenn nach dem Inkontaktbringen des zuschlagstoffaktiven Mittels mit der Oberfläche das Formteil bei einer vorbestimmten Temperatur, vorzugsweise bei einer Temperatur zwischen 10°C und 180°C, besonders bevorzugt bei einer Temperatur zwischen 90°C und 110°C, getrocknet wird, wobei das Formteil vorzugsweise unterhalb des Atmosphärendrucks, besonders bevorzugt in einem weitgehenden Vakuum, getrocknet wird.

Vorteilhaft kann es sein, wenn nach dem Inkontaktbringen des polymeraktiven Mittels mit der Oberfläche das Formteil bei einer vorbestimmten Temperatur, vorzugsweise bei einer Temperatur zwischen 10°C und 180°C, besonders bevorzugt bei einer Temperatur zwischen 20°C und 100°C, getrocknet wird, wobei das Formteil vorzugsweise unterhalb des Atmosphärendrucks, besonders bevorzugt in einem weitgehenden Vakuum, getrocknet wird.

Vorteilhaft kann es sein, wenn die Temperatur für das Trocknen so gewählt wird, dass sie unterhalb der Schmelztemperatur, vorzugweise unterhalb der Erweichungstemperatur des Polymers liegt.

Vorteilhaft kann es sein, wenn die Kombination aus Druck und Temperatur ein Entweichen des polymeraktiven Mittels aus den angelösten Polymer aufweisenden Oberflächenbereichen beschleunigt.

Vorteilhaft kann es sein, wenn die Kombination aus Druck und Temperatur so gewählt wird, dass ein Entweichen des polymeraktiven Mittels aus den angelösten Polymer aufweisenden Oberflächenbereichen beschleunigt wird.

Vorteilhaft kann es sein, wenn der erste Zeitraum zwischen 1 Sekunde und 10 Stunden, vorzugsweise zwischen 1 Stunde und 4 Stunden beträgt.

Vorteilhaft kann es sein, wenn das Inkontaktbringen des zuschlagstoffaktiven Mittels mit der Oberfläche mehrfach wiederholt wird und/oder das Inkontaktbringen des polymeraktiven Mittels mit der Oberfläche mehrfach wiederholt wird.

Vorteilhaft kann es sein, wenn
- die zweite Temperatur unterhalb der Schmelztemperatur des Polymers, besonders bevorzugt unter der Erweichungstemperatur des Polymers liegt, und/oder
- der zweite Zeitraum zwischen 1 Sekunde und 10 Stunden, vorzugsweise zwischen 5 Sekunden und 1 Stunde beträgt.

Vorteilhaft kann es sein, wenn das Inkontaktbringen des zuschlagstoffaktiven Mittels mit der Oberfläche des Formteils
- ein Eintauchen des Formteils in ein das zuschlagstoffaktive Mittel aufweisendes Bad,
- ein Bedampfen der Oberfläche des Formteils mit dem zuschlagstoffaktiven Mittel,
- ein Aufbringen des zuschlagstoffaktiven Mittels in gasförmiger Form auf die Oberfläche des Formteils,
- ein Besprühen der Oberfläche des Formteils mit dem zuschlagstoffaktiven Mittel, und
- Kombination hiervon,
umfasst.

Vorteilhaft kann es sein, wenn beim Eintauchen des Formteils in das das zuschlagstoffaktive Mittel aufweisende Bad
- das Formteil in dem Bad bewegt und/oder umgewälzt wird und/oder
- das Bad umgewälzt wird.

Vorteilhaft kann es sein, wenn das polymeraktive Mittel im gasförmigen oder flüssigen Zustand in Kontakt mit der Oberfläche des Formteils gebracht wird.

Vorteilhaft kann es sein, wenn das Lösungsmittel eine ähnliche oder gleich Polarität aufweist wie das Polymer, und/oder wobei das Lösungsmittel ausgewählt wird aus der Klasse der destillierbaren Lösungsmittel.

Vorteilhaft kann es sein, wenn die Oberfläche nach dem Inkontaktbringen der Oberfläche mit dem zuschlagstoffaktiven Mittel gestrahlt wird, vorzugsweise unter Verwendung von Metallstrahlmittel und/oder Kunststoffstrahlmittel, insbesondere Kunststoffkugeln und/oder gefüllte Kunststoffstrahlmittel.

Das Formteil kann ein in einem additiven Fertigungsverfahren hergestelltes Formteil sein.

Vorteilhaft kann es sein, wenn das zuschlagstoffaktive Mittel ausgewählt wird aus der Gruppe umfassend organische Säuren, organische Basen, organische Amine, organische Hydroxide, organische Salze, amphotere Verbindungen, Mineralsäuren, anorganische Säuren, anorganische Basen, anorganische Salze, Ammoniak, Alkalimetallcarbonate, Alkalimetalldicarbonate, Alkalimetallhypochlorite, Alkalimetallhydroxide, Erdalkalimetallhydroxide, Ammoniumhydroxide, und Kombination oder Gemische hiervon

Vorteilhaft kann es sein, wenn das polymeraktive Mittel ausgewählt wird
- aus der Gruppe umfassend Alkane, Alkene, Aromate, Carbonsäuren, Ester, Ether, Terpene, Ketone, Aldehyde, Lactone, Lactame, Nitrile, Nitroverbindungen, tertiäre Carbonsäureamide, Harnstoffderivate, Sulfoxide, Sulfone, Kohlensäureester, Wasser, anorganischen Säuren, Alkohole, Amine, Carbonsäuren, primäre Amide, sekundäre Amide, Acetale, Halbacetale, halogenhaltige Kohlenwasserstoffe, und Kombinationen oder Mischungen hiervon, und/oder
- aus der Gruppe Benzylalkohol, Limone, 1,8-Cineol, Ameisensäure, Dichlormethan, Dimethylsulfoxid, Isopropanol, Acetophenon, Formaldehyd-Dibutyl-Acetal, Dichloressigsäure, Schwefelsäure, Dimethylformamid, 1,1,1,3,3,3-Hexafluor-2-propanol, m-Cresol, 2-Methyl-Tetrahydrofuran, und Kombinationen oder Mischungen hiervon.

Vorteilhaft kann es sein, wenn zum Herstellen des Formteils ein Polymer verwendet wird, das ausgewählt wird aus der Gruppe umfassend thermoplastische Elastomere, thermoplastische Elastomere auf Urethan-Basis, thermoplastische Polyamidelastomere, thermoplastische Copolyesterelastomere, thermoplastische Elastomere auf Olefin-Basis, thermoplastische Styrol-Blockcopolymere, Polyoxymethylene, Polyethylenterephthalate, Polyethylenterephthalat-Glycole, Polyetherblockamide, Polyethylenfuranoate, Polyurethane, Acryl-Nitril-Butadien-Styrole, thermoplastische Polyamide, Photopolymere, Triblock-Polymere aus Polystyrol und Poly(ethylenoxid)-Blöcke, Polyamide, Polyester, Polyolefine, Polyacrylate, Polyvinylamine, Polyacrylamide, Polymethyl(meth)acrylate, Polyether, Polycarbonate, Polylactide, Polyethersulfone, Polysulfone, Polyphenylsulfone, Polyimide, Polyetherimide, Polyketone, Polyetherketone, Styrolpolymere, Styrolblockpolymere, Acrylnitrilstyrolacrylate, Copolymere, und Blends oder Mischungen hiervon.

Vorteilhaft kann es sein, wenn zum Herstellen des Formteils ein Zuschlagstoff verwendet wird, der ausgewählt wird aus der Gruppe umfassend natürliche und synthetische Polymere, anorganische Füllstoffe, Keramiken, Talke, Quarze, Metalle, Oxide, Carbide, Nitride, Boride, Stahl, Legierungen mit Metallen und Nichtmetallen, Gläser, Mineralien, Farbstoffe, Gummis, Holz, Graphit, Aktivkohle, Carbon, Farbstoffe, und Mischungen hiervon, wobei das Metall vorzugsweise ausgewählt aus der Gruppe umfassend Titan, Aluminium, Kupfer, Nickel, Kobalt, Eisen, Molybdän, Magnesium, Tantal, Chrom, Wolfram, Zink, Gold, Silber, Zinn, Platinum, Zirkonium, Legierungen hiervon mit anderen Metallen und Nichtmetallen, beispielsweise Bronze, und Kombinationen hiervon.

Des weiteren wird ein Verfahren zur Behandlung einer Oberfläche eines unter Verwendung eines mit zumindest einem Zuschlagstoff versehenen Polymers hergestellten Formteils bereitgestellt, wobei die Oberfläche des Formteils
- für einen ersten Zeitraum in Kontakt mit einem eine erste Temperatur aufweisenden zuschlagstoffaktiven Mittel gebracht wird,
- vorzugsweise nach dem Inkontaktbringen der Oberfläche mit dem zuschlagstoffaktiven Mittel gestrahlt wird, vorzugsweise unter Verwendung von Metallstrahlmittel und/oder Kunststoffstrahlmittel, insbesondere Kunststoffkugeln und/oder gefüllte Kunststoffstrahlmittel,
wobei das zuschlagstoffaktive Mittel angepasst ist, während des Inkontaktbringens mit der Oberfläche den an der Oberfläche des Formteils vorhandenen Zuschlagstoff zumindest teilweise von der Oberfläche zu entfernen.

Bereitgestellt wird durch die Erfindung ferner ein Formteil, das unter Verwendung eines mit zumindest einem Zuschlagstoff versehenen Polymers in einem additiven Fertigungsverfahren hergestellt wird und dessen Oberfläche mit einem erfindungsgemäß Verfahren bearbeitet worden ist.

Das Formteil kann eine Tiefziehform oder eine Vakuumspritzgussform ist.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine Ausgestaltung eines erfindungsgemäßen Verfahrens;
- Fig. 2: eine alternative Ausgestaltung eines erfindungsgemäßen Verfahrens;
- Fig. 3: eine weitere alternative Ausgestaltung eines erfindungsgemäßen Verfahrens;
- Fig. 4: eine weitere alternative Ausgestaltung eines erfindungsgemäßen Verfahrens; und
- Fig. 5: eine noch weitere Ausgestaltung eines erfindungsgemäßen Verfahrens.

### Detaillierte Beschreibung der Erfindung

Die Erfindung wird anhand der Figuren näher beschrieben. In den Figuren sind jeweils ein Ausschnitt eines Formteils 10, der Zuschlagstoff Z, das Polymer P gezeigt, wobei die einzelnen Abbildungen stark schematisiert sind und lediglich der Verdeutlichung des erfindungsgemäßen Verfahrens dienen. Die in einem 3D-Druckverfahren additiv hergestellten Formteile können nach dem Drucken und vor dem Ausführen des erfindungsgemäßen Verfahrens gegebenenfalls vom überschüssigen Druckmaterial befreit und gegebenenfalls gereinigt werden.

Nachfolgend wir mit Bezug auf das in einem 3d-Druckverfahren hergestellte Formteil von Polymerpartikel gesprochen. Gemeint ist hier immer ein das Polymer P aufweisender Oberflächenabschnitt. Dasselbe gilt auch für die Partikel aus dem Zuschlagstoff, d.h. gemeint ist hier immer ein den Zuschlagstoff aufweisender Oberflächenabschnitt.

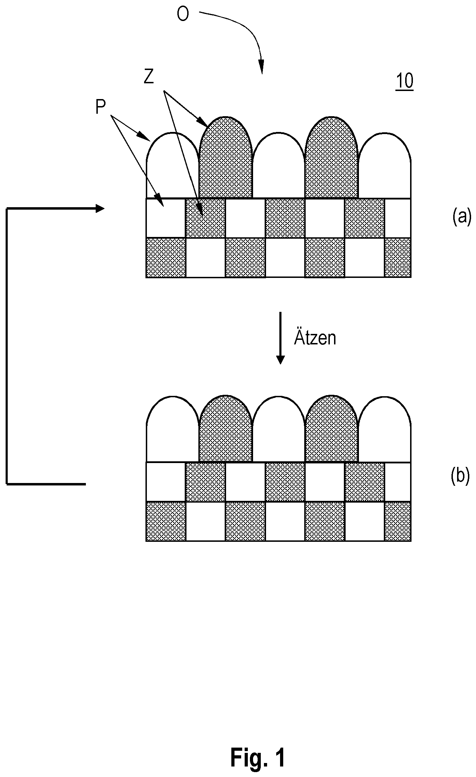

**Fig. 1** zeigt schematisch ein Blockdiagramm für einen Ablauf eines erfindungsgemäßen Verfahrens.

Bereitgestellt wird ein Formteil 10, das in einem additiven Fertigungsverfahren (3D-Druckverfahren) herstellt worden ist, wobei hier lediglich ein Ausschnitt des Formteils 10 gezeigt ist.

Das Formteil wurde mit einem zumindest einen Zuschlagstoff Z versehenen bzw. aufweisenden Polymer P hergestellt. Der Zuschlagstoff Z ist hier weitgehend homogen in dem Formteil und an der Oberfläche O des Formteils 10 verteilt. Der Zugschlagstoff kann aber auch nicht-homogen verteilt sein und/oder anderen Teilchenabstand haben, einen anderen Füllstoffanteil und/oder eine andere Teilchengröße und/oder Form haben, und insbesondere von der in den Figuren gezeigten Verteilung abweichen. Bei dem Zuschlagstoff kann es sich beispielsweise um ein Metall handeln. Nachfolgend wird die Erfindung anhand eines Metalls als Zuschlagstoff beschrieben, wobei die Erfindung nicht hierauf begrenzt ist.

Abbildung (a) zeigt die Oberfläche O des Formteils 10, bevor sie mit dem erfindungsgemäßen Verfahren behandelt worden ist. Erkennbar ist hier deutlich die raue Oberfläche O des Formteils 10, die Abschnitte aus dem Polymer P und Abschnitte aus dem Zuschlagstoff Z bzw. aus dem Metall aufweist. Die Abschnitte aus dem Zuschlagstoff Z bzw. aus dem Metall sind hier an der Oberfläche des Formteils mit bloßem Auge oder unter dem Mikroskop sichtbar.

Die Oberflächenabschnitte aus dem Zuschlagstoff Z bzw. die Partikel aus dem Zuschlagstoff Z stehen hier weiter an der Oberfläche über als die Polymerpartikel. Das erfindungsgemäße Verfahren kann aber auch angewandt werden, bei Formteilen, bei denen die Oberflächenabschnitte aus dem Zuschlagstoff Z bzw. die Partikel aus dem Zuschlagstoff Z nicht an Polymeroberfläche überstehen.

Erfindungsgemäß wird die Oberfläche des Formteils für einen ersten Zeitraum in Kontakt mit einem eine erste Temperatur aufweisenden zuschlagstoffaktiven Mittel gebracht, der hier als Ätzschritt bezeichnet wird.

Durch dieses Inkontaktbringen der Oberfläche mit dem zuschlagstoffaktiven Mittel (Ätzmittel) wird der an der Oberfläche vorhandene Zuschlagstoff bzw. Metall zumindest teilweise von der Oberfläche entfernt. Vorzugsweise wird durch das Ätzmittel der an der Oberfläche des Formteils vorhandene Zuschlagstoff zumindest anteilig chemisch umgewandelt und/oder in Lösung gebracht, und der in Lösung gebrachte Anteil des Zuschlagstoffes wird von der Oberfläche des Formteils entfernt. Das Ätzmittel und der darin enthaltene und in Lösung gebrachte Anteil des Zuschlagstoffes werden anschließend von der Oberfläche entfernt. Das Ätzmittel wird hierbei so gewählt, dass es nur den Zuschlagstoff in Lösung bringt, nicht aber das Polymer.

Als Ergebnis des Ätzschrittes erhält man ein Formteil mit einer Oberfläche, bei der der Zuschlagstoff zumindest teilweise von der Oberfläche entfernt worden ist. Dieses Ergebnis des Ätzschrittes ist in Abbildung (b) der Fig. 1 gezeigt. Bei dem in Fig. 1 gezeigten Fall, bei dem die Partikel aus dem Zuschlagstoff Z anfangs (Abbildung (a)) weiter an der Oberfläche überstehen als die Polymerpartikel wurden in dem Ätzschritt die Partikel aus dem Zuschlagstoff Z zumindest soweit entfernt, dass sie weitgehend gleichweit an der Oberfläche überstehen wie die Polymerpartikel. Das Ergebnis hiervon ist eine deutlich glattere Oberfläche des Formteils.

Die Partikel aus dem Zuschlagstoffpartikel können aber auch so weit entfernt werden, dass sie verschieden weit an der Oberfläche überstehen.

In einer weiteren Ausführungsform des Verfahrens kann der Ätzschritt so ausgestaltet sein, dass der Ätzvorgang weitgehend automatisch gestoppt wird, sobald der von dem Äzmittel erreichbare Zuschlagstoff chemisch umgewandelt bzw. gelöst ist.

Sofern nur ein bestimmter Abschnitt der Oberfläche des Formteils mit dem erfindungsgemäßen Verfahren behandelt werden soll, ist es vorteilhaft, wenn nur dieser Abschnitt der Oberfläche in Kontakt mit dem Ätzmittel gebracht wird.

Das Ätzmittel kann in unterschiedlichen Aggregatzuständen (etwa in flüssiger, gasförmiger oder dampfförmiger Form), als Aerosol, als Gasgemisch oder als flüssige Lösung in Kontakt mit der Oberfläche gebracht werden. Beispielsweise kann das zu behandelnde Formteil in ein Ätzmittel-Tauchbad gegeben werden, mit dem Ätzmittel bedampft oder besprüht werden. Hierbei können an sich bekannte Vorrichtungen verwendet werden, etwa Tauchbadvorrichtungen, Spritz- bzw. Sprühvorrichtungen oder dergleichen.

In einer besonderen Ausgestaltung der Erfindung kann das Formteil selbst den Behälter für das Ätzmittel bilden (etwa ein wannenförmiges Formteil oder ein Formteil mit einem Hohlraum, in den das Ätzmittel aufgenommen werden kann). Hierbei kann es vorgesehen sein, dass nur die Innenwandung des Wannenförmiges Formteils bzw. des Hohlraumes in Kontakt mit dem Ätzmittel gebracht wird.

Vorzugsweise wird das Ätzmittel ausgewählt aus der Gruppe umfassend organische Säuren, organische Basen, organische Amine, organische Salze, organische Hydroxide, amphotere Verbindungen, Mineralsäuren, anorganische Säuren, anorganische Basen, anorganische Salze, Ammoniak, Alkalimetallcarbonate, Alkalimetalldicarbonate, Alkalinetallhypochlorite, Alkalimetallhydroxide, Erdalkalimetallhydroxide, Ammoniumhydroxide, Verbindungen mit vergleichbaren Eigenschaften, wie die vorgenannten, und Kombination bzw. Gemische hiervon. Als besonders geeignet haben sich Alkalimetallhydroxide, insbesondere Natriumhydroxid erwiesen.

Weiter hat es sich als vorteilhaft herausgestellt, wenn das zuschlagstoffaktive Mittel bzw. das Ätzmittel als zuschlagstoffaktives Gemisch in Kontakt mit der Oberfläche gebracht wird, wobei das zuschlagstoffaktive Gemisch ein Trägermedium, insbesondere ein Lösungsmittel, und das zuschlagstoffaktive Mittel umfasst. Als Lösungsmittel für das Ätzmittel kann hierbei Wasser verwendet werden. Andere geeignete Lösungsmittel können bei Bedarf ebenfalls verwendet werden, wobei es vorteilhaft ist, wenn das hierfür verwendete Lösungsmittel das Polymer nicht anlöst und/oder nicht quellen lässt.

Der Anteil des zuschlagstoffaktiven Mittels bzw. Ätzmittels in dem zuschlagstoffaktiven Gemisch kann bezogen auf das Gesamtgewicht des zuschlagstoffaktiven Gemischs 1 bis 90 Gew.-% betragen, vorzugsweise 10 bis 60 Gew.-%. Durch Anpassen des Lösungsmittelanteils in dem zuschlagstoffaktiven Gemisch kann optional die Intensität bzw. Stärke des Ätzvorganges in dem Ätzschritt eingestellt werden. Das kann insbesondere dann vorteilhaftsein, wenn nur ein sehr geringer Anteil des Zuschlagstoffes von der Oberfläche entfernt werden soll, sodass mit einem geringeren Anteil von Ätzmittel in dem Gemisch die Intensität des Ätzvorganges entsprechend reduziert werden kann. Gegebenenfalls ist es aber auch möglich das Ätzmittel direkt, d.h. ohne ein Trägermedium (etwa ein Lösungsmittel), in Kontakt mit der zu behandelnden Oberfläche zu bringen.

In einer anderen Ausführung wird die Ätzrate absichtlich nicht kontrolliert und nicht eingestellt. In einer anderen Ausführung wird die Ätzrate durch den Verbrauch des Zuschlagstoffes kontrolliert, sodass der Ätzvorgang ohne Zutun gestoppt wird, sobald der von dem Ätzmittel erreichbare Zuschlagstoff chemisch umgewandelt bzw. gelöst ist.

Der Ätzschritt, d.h. der erste Zeitraum, in dem der Ätzschritt ausgeführt wird, kann unterschiedliche lange gewählt werden. Die effektive Dauer des Ätzschrittes kann von dem verwendeten Zuschlagstoff, von dem verwendeten Ätzmittel, von dem Anteil des Ätzmittels in dem Gemisch und gegebenenfalls von der Temperatur des Ätzmittels abhängen. Bevorzugt beträgt der erste Zeitraum zwischen 1 Sekunde und 24 Stunden, besonders bevorzugt zwischen 1 Stunde und 4 Stunden. Der erste Zeitraum kann gegebenenfalls reduziert werden, indem der Anteil an Ätzmittel in dem Gemisch erhöht wird.

Der Ätzschritt kann ferner bei unterschiedlichen Temperaturen durchgeführt werden. Temperaturen zwischen 1°C und 90 °C, bevorzugt zwischen 20°C und 70°C haben sich als vorteilhaft erwiesen. In einer Ausgestaltung der Erfindung kann der Ätzschritt mehrmals wiederholt werden, wobei die Temperatur des Ätzmittels bei jeder Wiederholung verschieden zur vorhergehenden Wiederholung sein kann. In einer alternativen Ausgestaltung kann die Temperatur des Ätzmittels während eines Ätzschrittes erhöht oder reduziert werden. In beiden Fällen kann so ein Temperaturverlauf des Ätzmittels erreicht bzw. eingestellt werden, der für den Ätzvorgang bzw. die Steuerung des Ätzvorganges vorteilhaft ist. So kann beispielsweise die Intensität bzw. Stärke des Ätzvorganges über die Zeit angepasst werden. Damit kann beispielsweise durch das Reduzieren der Ätzmitteltemperatur über die Zeit die Intensität des Ätzvorganges über die Zeit reduziert werden, sodass ein sehr präzises Ätzen möglich ist. Umgekehrt kann eine Erhöhung der Ätzmitteltemperatur über die Zeit zu einer Erhöhung der Ätzrate (Intensität) über die Zeit führen. In einer anderen Ausführung wird die Ätzrate absichtlich nicht kontrolliert und nicht eingestellt. In einer anderen Ausführung wird die Ätzrate durch den Verbrauch des Zuschlagstoffes kontrolliert, sodass der Ätzvorgang ohne Zutun gestoppt wird, sobald der von dem Ätzmittel erreichbare Zuschlagstoff chemisch umgewandelt bzw. gelöst ist.

Eine erhöhte Temperatur sorgt für eine schnellere Reaktion zwischen Ätzmittel und Metall und/oder eine verbesserte Löslichkeit des entstehenden Produktes - der Ätzvorgang kann so verkürzt werden. Dabei ist aber darauf zu achten, dass die tieferliegende Metallpartikel (d.h. die "unterhalb" der Oberfläche liegenden Metallpartikel) nicht angegriffen werden.

Die Ätzmitteltemperatur, die Ätzdauer bzw. der erste Zeitraum und das Gemisch (Anteil des Ätzmittels in dem zuschlagstoffaktiven Gemisch) werden vorzugsweise in Abhängigkeit von
- dem Zuschlagstoff Z und dem Polymer P,
- gegebenenfalls von der Wandstärke des Formteils,
- der Größe des Formteils, d.h. von der Fläche der zu behandelnden Oberfläche,
- der Größe der Partikel des Zuschlagstoffes (jedenfalls jener Partikel, die an der Oberfläche des Formteils vorhanden sind),
- dem relativen Anteil des Zuschlagstoffes (im Verhältnis zum Polymeranteil) in der Oberfläche des Formteils, und/oder
- der ursprünglichen und/oder von der gewünschten Oberflächenbeschaffenheit (zum Beispiel Porosität und/oder Rauheit) des Formteils
gewählt, wobei eine oder mehrere dieser Eigenschaften berücksichtigt werden können.

Die Zusammensetzung des Ätzmittels, die Konzentration des Ätzmittels in dem zuschlagstoffaktiven Gemisch, die Zusammensetzung des Formteils (Zusammensetzung des Polymers P, Zusammensetzung des Zuschlagstoffes und Anteil des Zuschlagstoffes in dem Polymer), die Dauer des Kontakts mit dem Formteil, die Temperatur, der Druck, sowie weitere Faktoren, die die Diffusion und/oder Aktivität des Ätzmittels beeinflussen, bestimmen die Stärke bzw. Intensität des Ätzvorgangs.

Vorteilhaft kann es sein, wenn das Formteil während des Ätzschrittes in dem Ätzmittel bzw. in dem zuschlagstoffaktiven Gemisch bewegt, beispielsweise umgewälzt, vorzugsweise ständig umgewälzt wird. Es hat sich nämlich gezeigt, dass Gase, die sich gegebenenfalls bei der Reaktion zwischen dem Zuschlagstoff und dem Ätzmittel bilden können, eine Art Schutzschicht für die Oberfläche des Formteils bilden können, die den Ätzvorgang negativ beeinflussen können (etwa zu einer inhomogen geätzten Oberfläche führen können). Das (ständige) Umwälzen des Formteils in dem Ätzmittel bzw. in dem zuschlagstoffaktiven Gemisch bzw. das Umwälzen des Ätzmittels selbst bewirkt, dass diese Gase von der Oberfläche des Formteils entfernt werden und die Oberfläche während des gesamten Ätzvorganges benetzt bleibt. Alternativ kann die Homogenität des Ätzvorgangs durch die Behandlung mit Ultraschall sichergestellt werden.

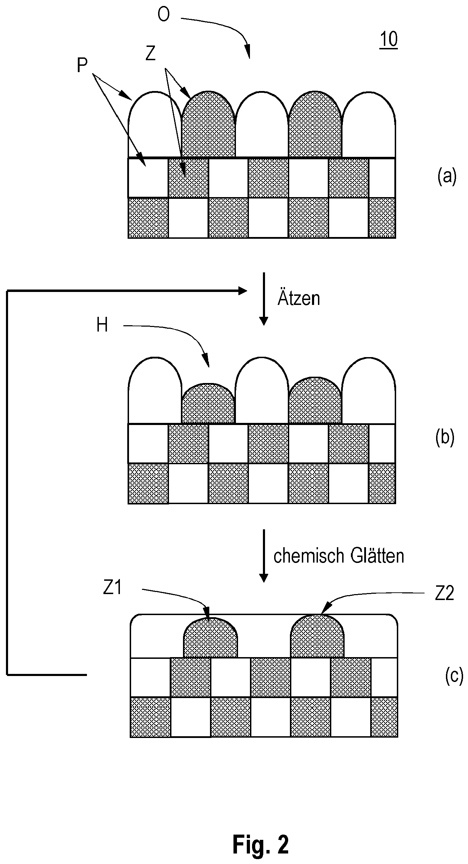

**Fig. 2** zeigt schematisch ein Blockdiagramm für einen Ablauf eines erfindungsgemäßen Verfahrens gemäß einer alternativen Variante.

Bereitgestellt wird ein Formteil 10, das in einem additiven Fertigungsverfahren (3D-Druckverfahren) herstellt worden ist, wobei hier lediglich ein Ausschnitt des Formteils 10 gezeigt ist.

Das Formteil wurde mit einem zumindest einen Zuschlagstoff Z versehenen bzw. aufweisenden Polymer P hergestellt. Der Zuschlagstoff Z ist hier weitgehend homogen in dem Formteil und an der Oberfläche O des Formteils 10 verteilt. Der Zugschlagstoff kann aber auch nicht-homogen verteilt sein und insbesondere von der in den Figuren gezeigten Verteilung abweichen. Bei dem Zuschlagstoff kann es sich beispielsweise um ein Metall handeln. Nachfolgend wird die Erfindung anhand eines Metalls als Zuschlagstoff beschrieben, wobei die Erfindung nicht hierauf begrenzt ist.

Abbildung (a) zeigt die Oberfläche O des Formteils 10, bevor sie mit dem erfindungsgemäßen Verfahren behandelt worden ist. Erkennbar ist hier deutlich die raue Oberfläche O des Formteils 10, die Abschnitte aus dem Polymer P und Abschnitte aus dem Zuschlagstoff Z bzw. aus dem Metall aufweist. Die Abschnitte aus dem Zuschlagstoff Z bzw. aus dem Metall sind hier an der Oberfläche des Formteils mit bloßem Auge oder unter dem Mikroskop sichtbar.

Gemäß der in Fig. 2 gezeigten Variante umfasst das erfindungsgemäße Verfahren im Wesentlichen zwei Schritte, nämlich
- ein Ätzen (Ätzschritt) der Oberfläche und
- ein chemisches Glätten (Glättschritt) der Oberfläche,
wobei gemäß der in Fig. 2 gezeigten Variante zunächst der Ätzschritt und anschließend der Glättschritt ausgeführt werden. Diese beiden Schritte werden nachfolgend im Detail beschrieben.

### Ätzschritt

In dem Ätzschritt wird die Oberfläche des Formteils für einen ersten Zeitraum in Kontakt mit einem eine erste Temperatur aufweisenden zuschlagstoffaktiven Mittel gebracht. Durch dieses Inkontaktbringen der Oberfläche mit dem zuschlagstoffaktiven Mittel (Ätzmittel) wird der an der Oberfläche vorhandene Zuschlagstoff bzw. Metall zumindest teilweise von der Oberfläche entfernt. Vorzugsweise wird durch das Ätzmittel der an der Oberfläche des Formteils vorhandene Zuschlagstoff zumindest anteilig in Lösung gebracht, und der in Lösung gebrachte Anteil des Zuschlagstoffes wird von der Oberfläche des Formteils entfernt. Das Ätzmittel und der darin enthaltene und in Lösung gebrachte Anteil des Zuschlagstoffes werden anschließend von der Oberfläche entfernt. Das Ätzmittel wird hierbei so gewählt, dass es bevorzugt nur den Zuschlagstoff in Lösung bringt.

Als Ergebnis des Ätzschrittes erhält man ein Formteil mit einer Oberfläche, bei der der Zuschlagstoff zumindest teilweise von der Oberfläche entfernt worden ist. Dieses Ergebnis des Ätzschrittes ist in Abbildung (b) der Fig. 2 gezeigt. Durch das zumindest teilweise Entfernen des Zuschlagstoffes Z von der Oberfläche O bilden sich zwischen den das Polymer P aufweisenden Oberflächenabschnitten Vertiefungen bzw. Hohlräume H, wodurch sich die Rauigkeit der Oberfläche zunächst gegebenenfalls erhöhen kann.

Sofern nur ein bestimmter Abschnitt der Oberfläche des Formteils mit dem erfindungsgemäßen Verfahren behandelt werden soll, ist es vorteilhaft, wenn nur dieser Abschnitt der Oberfläche in Kontakt mit dem Ätzmittel gebracht wird.

Das Ätzmittel kann in unterschiedlichen Aggregatzuständen (etwa in flüssiger, gasförmiger oder dampfförmiger Form), als Aerosol, als Gasgemisch oder als flüssige Lösung in Kontakt mit der Oberfläche gebracht werden. Beispielsweise kann das zu behandelnde Formteil in ein Ätzmittel-Tauchbad gegeben werden, mit dem Ätzmittel bedampft oder besprüht werden. Hierbei können an sich bekannte Vorrichtungen verwendet werden, etwa Tauchbadvorrichtungen, Bedampfungsvorrichtunen, Spritz- bzw. Sprühvorrichtungen oder dergleichen.

In einer besonderen Ausgestaltung der Erfindung kann das Formteil selbst den Behälter für das Ätzmittel bilden (etwa ein Wannenförmiges Formteil oder ein Formteil mit einem Hohlraum, in den das Ätzmittel aufgenommen werden kann). Hierbei kann es vorgesehen sein, dass nur die Innenwandung des Wannenförmiges Formteils bzw. des Hohlraumes in Kontakt mit dem Ätzmittel gebracht wird.

Vorzugsweise wird das Ätzmittel ausgewählt aus der Gruppe umfassend organische Säuren, organische Basen, organische Amine, organische Salze, organische Hydroxide, amphotere Verbindungen, Mineralsäuren, anorganische Säuren, anorganische Basen, anorganische Salze, Ammoniak, Alkalimetallcarbonate, Alkalimetalldicarbonate, Alkalinetallhypochlorite, Alkalimetallhydroxide, Erdalkalimetallhydroxide, Ammoniumhydroxide, Verbindungen mit vergleichbaren Eigenschaften, wie die vorgenannten, und Kombination bzw. Gemische hiervon. Als besonders geeignet haben sich Alkalimetallhydroxide, insbesondere Natriumhydroxid erwiesen.

Weiter hat es sich als vorteilhaft herausgestellt, wenn das zuschlagstoffaktive Mittel bzw. das Ätzmittel als zuschlagstoffaktives Gemisch in Kontakt mit der Oberfläche gebracht wird, wobei das zuschlagstoffaktive Gemisch ein Trägermedium, etwa ein Lösungsmittel, und das zuschlagstoffaktive Mittel umfasst. Als Trägermedium bzw. Lösungsmittel für das Ätzmittel kann hierbei Wasser verwendet werden. Andere geeignete Lösungsmittel können bei Bedarf ebenfalls verwendet werden, wobei es vorteilhaft ist, wenn das hierfür verwendet Lösungsmittel das Polymer nicht anlöst. Es können auch andere Hilfsmittel in dem zuschlagstoffaktiven Gemisch enthalten sein, die z.B. die Auftragfähigkeit, die Streichfähigkeit, die Filmbildung, die Lubrikation und/oder die Lagerfähigkeit des Gemisches verbessern und/oder die Lösung des Zuschlagstoffes verbessern (z.B. Komplexbildner).

Der Anteil des zuschlagstoffaktiven Mittels bzw. Ätzmittels in dem zuschlagstoffaktiven Gemisch beträgt bezogen auf das Gesamtgewicht des zuschlagstoffaktiven Gemischs 1 bis 90 Gew.-%, vorzugsweise 10 bis 60 Gew.-%. Durch Anpassen des Lösungsmittelanteils in dem zuschlagstoffaktiven Gemisch kann in vorteilhafterweise die Intensität bzw. Stärke des Ätzvorganges in dem Ätzschritt eingestellt werden. Das ist insbesondere dann vorteilhaft ist, wenn nur ein sehr geringer Anteil des Zuschlagstoffes von der Oberfläche entfernt werden soll, sodass mit einem geringeren Anteil von Ätzmittel in dem Gemisch die Intensität des Ätzvorganges entsprechend reduziert werden kann. Gegebenenfalls ist es aber auch möglich das Ätzmittel direkt, d.h. ohne ein Trägermedium, etwa Lösungsmittel, in Kontakt mit der zu behandelnden Oberfläche zu bringen.

Der Ätzschritt, d.h. der erste Zeitraum, in dem der Ätzschritt ausgeführt wird, kann unterschiedliche lange gewählt werden. Die effektive Dauer des Ätzschrittes kann von dem verwendeten Zuschlagstoff, von dem verwendeten Ätzmittel, von dem Anteil des Ätzmittels in dem Gemisch und gegebenenfalls von der Temperatur des Ätzmittels abhängen. Bevorzugt beträgt der erste Zeitraum zwischen 1 Sekunde und 24 Stunden, besonders bevorzugt zwischen 1 Stunde und 4 Stunden. Der erste Zeitraum kann gegebenenfalls reduziert werden, indem der Anteil an Ätzmittel in dem Gemisch erhöht wird.

Der Ätzschritt kann ferner bei unterschiedlichen Temperaturen durchgeführt werden. Temperaturen zwischen 1°C und 90°C, bevorzugt zwischen 20°C und 70°C haben sich als vorteilhaft erwiesen. In einer Ausgestaltung der Erfindung kann der Ätzschritt mehrmals wiederholt werden, wobei die Temperatur des Ätzmittels oder die chemische Zusammensetzung des Ätzmittels bei jeder Wiederholung verschieden zur vorhergehenden Wiederholung sein kann. Wird die chemische Zusammensetzung des Ätzmittels bei jeder Wiederholung geändert, können mit jeder Wiederholung andere Zuschlagstoffe aus der Oberfläche des Formteils entfernt werden.

In einer alternativen Ausgestaltung kann die Temperatur des Ätzmittels während des Ätzschrittes erhöht oder reduziert werden. In beiden Fällen kann so ein Temperaturverlauf des Ätzmittels erreicht bzw. eingestellt werden, der für den Ätzvorgang bzw. die Steuerung des Ätzvorganges vorteilhaft ist. So kann beispielsweise die Intensität bzw. Stärke des Ätzvorganges über die Zeit angepasst werden. Damit kann beispielsweise durch das Reduzieren der Ätzmitteltemperatur über die Zeit die Intensität des Ätzvorganges über die Zeit reduziert werden, sodass ein sehr präzises Ätzen möglich ist. Umgekehrt kann eine Erhöhung der Ätzmitteltemperatur über die Zeit zu einer Erhöhung der Ätzrate (Intensität) über die Zeit führen. In einer anderen Ausführung wird die Ätzrate absichtlich nicht kontrolliert und nicht eingestellt. In einer anderen Ausführung wird die Ätzrate durch den Verbrauch des Zuschlagstoffes kontrolliert, sodass der Ätzvorgang ohne Zutun gestoppt wird, sobald der erreichbare Zuschlagstoff chemisch umgewandelt bzw. gelöst ist.

Eine erhöhte Temperatur sorgt für eine schnellere Reaktion zwischen Ätzmittel und Metall und eine verbesserte Löslichkeit des entstehenden Produktes - der Ätzvorgang kann so verkürzt werden. Dabei ist aber darauf zu achten, dass die tieferliegende Metallpartikel (d.h. die "unterhalb" der Oberfläche liegenden Metallpartikel) nicht angegriffen werden.

Die Ätzmitteltemperatur, die Ätzdauer bzw. der erste Zeitraum und das Gemisch (Anteil des Ätzmittels in dem zuschlagstoffaktiven Gemisch) werden vorzugsweise in Abhängigkeit von
- dem Zuschlagstoff Z und dem Polymer P,
- gegebenenfalls von der Wandstärke des Formteils,
- der Größe des Formteils, d.h. von der Fläche der zu behandelnden Oberfläche,
- der Größe der Partikel des Zuschlagstoffes (jedenfalls jener Partikel, die an der Oberfläche des Formteils vorhanden sind),
- dem relativen Anteil des Zuschlagstoffes (im Verhältnis zum Polymeranteil) in der Oberfläche des Formteils,
- der ursprünglichen und/oder von der gewünschten Oberflächenbeschaffenheit (zum Beispiel Porosität und/oder Rauheit) des Formteils, und/oder
- den nach dem Ätzvorgang entstehenden (gewünschten) Vertiefungen bzw. Hohlräume H
gewählt, wobei eine oder mehrere dieser Eigenschaften berücksichtigt werden können.

Die Zusammensetzung des Ätzmittels, die Konzentration des Ätzmittels in dem zuschlagstoffaktiven Gemisch, die Zusammensetzung des Formteils (Zusammensetzung des Polymers P, Zusammensetzung des Zuschlagstoffes und Anteil des Zuschlagstoffes in dem Polymer), die Dauer des Kontakts mit dem Formteil, die Temperatur, der Druck, sowie weitere Faktoren, die die Diffusion und/oder die Aktivität des Ätzmittels beeinflussen, bestimmen die Stärke bzw. Intensität des Ätzvorgangs.

Der Ätzschritt bzw. das Ergebnis des Ätzschrittes wirkt sich direkt auf den nachfolgenden Glättschritt aus. Beispielsweise kann die Stärke / Intensität des Ätzens in dem Ätzschritt die Prozessführung in dem Glättschritt beeinflussen. So kann eine rauere Oberfläche nach dem Ätzschritt dazu führen, dass mehr Lösungsmittel an der Oberfläche in dem Glättschritt kondensiert (wegen der größeren Fläche der Oberfläche), wodurch wiederum die Dauer des Glättschrittes beeinflusst wird. Ein Entfernen von metallischen Partikeln aus der Oberfläche in dem Ätzschritt führt etwa zu einer veränderten thermischen Leitfähigkeit der Oberfläche des Formteils, was wiederum Auswirkungen auf die Prozessführung in dem Glättschritt haben kann.

Vorteilhaft kann es sein, wenn das Formteil während des Ätzschrittes in dem Ätzmittel bzw. in dem zuschlagstoffaktiven Gemisch bewegt, beispielsweise umgewälzt, vorzugsweise ständig umgewälzt wird. Es hat sich nämlich gezeigt, dass Gase, die sich bei der Reaktion zwischen dem Zuschlagstoff und dem Ätzmittel bilden können, eine Art Schutzschicht für die Oberfläche des Formteils bilden können, die den Ätzvorgang negativ beeinflussen können (etwa zu einer inhomogen geätzten Oberfläche führen können). Insbesondere kleine Strukturen oder Details an der Oberfläche des Formteils würden so nach dem Glättschritt nach wie vor eine (zu) raue Oberfläche aufweisen. Das (ständige) Umwälzen des Formteils in dem Ätzmittel bzw. in dem zuschlagstoffaktiven Gemisch bzw. des Ätzmittels selbst bewirkt, dass diese Gase von der Oberfläche des Formteils entfernt werden und die Oberfläche während des gesamten Ätzvorganges benetzt bleibt. Alternativ kann die Homogenität des Ätzvorgangs durch anderweitige Behandlung, z.B. mit Ultraschall sichergestellt werden.

### Glättschritt

In dem Glättschritt wird die Oberfläche des Formteils für einen zweiten Zeitraum in Kontakt mit einem eine zweite Temperatur aufweisenden polymeraktiven Mittel gebracht. Durch dieses Inkontaktbringen der Oberfläche mit dem polymeraktiven Mittel (Lösungsmittel) erhält die Oberfläche schließlich die gewünschte Glätte. Bei der zweiten Temperatur muss es sich nicht um eine konstante Temperatur handeln. Sie kann optional während des Glättschrittes innerhalb eines Temperaturintervalls angepasst werden.

Mit dem polymeraktiven Mittel bzw. Lösungsmittel werden die das Polymer aufweisenden Oberflächenabschnitte der Oberfläche O angelöst bzw. soweit angelöst, dass das angelöste Polymer, etwa in Form eines Gels, zumindest teilweise in jene Oberflächenbereiche migriert, in denen der an der Oberfläche des Formteils vorhandene Zuschlagstoff in dem Ätzschritt zumindest anteilig entfernt worden ist. Das heißt, mit dem angelösten Polymer werden die in dem Ätzschritt geschaffenen Vertiefungen bzw. Hohlräume H zumindest teilweise aufgefüllt und das angelöste Polymer verteilt sich vorzugsweise gleichmäßig über die gesamte Oberfläche. Dadurch wird eine besonders homogene glatte, nahezu keine Poren aufweisende Oberfläche erreicht, die zudem fluidabweisend und fluiddicht ist. Das Ergebnis des Glättschrittes ist in Abbildung (c) gezeigt.

Das polymeraktive Mittel bzw. Lösungsmittel wird hierbei vorzugsweise so gewählt, dass es nur das Polymer anlöst, nicht aber den Zuschlagstoff.

Sofern nur ein bestimmter Abschnitt der Oberfläche des Formteils mit dem erfindungsgemäßen Verfahren behandelt werden soll, ist es vorteilhaft, wenn nur dieser Abschnitt der Oberfläche in Kontakt mit dem Lösungsmittel gebracht wird.

Das polymeraktive Mittel bzw. das Lösungsmittel kann in unterschiedlichen Aggregatzuständen (etwa in flüssiger, gasförmiger oder dampfförmiger Form), als Aerosol, als Gasgemisch oder als flüssige Lösung in Kontakt mit der Oberfläche gebracht werden. Beispielsweise kann das zu behandelnde Formteil in ein Lösungsmittelbad gegeben werden, mit dem Lösungsmittel bedampft oder besprüht werden. Hierbei können an sich bekannte Vorrichtungen verwendet werden, etwa Tauchbadvorrichtungen, Spritz- bzw. Sprühvorrichtungen, Bedampfungsvorrichtungen oder dergleichen.

In einer besonderen Ausgestaltung der Erfindung kann das Formteil selbst den Behälter für das Lösungsmittel bilden (etwa ein Wannenförmiges Formteil oder ein Formteil mit einem Hohlraum, in den das Lösungsmittel aufgenommen werden kann). Hierbei kann es vorgesehen sein, dass nur die Innenwandung des Wannenförmiges Formteils bzw. des Hohlraumes in Kontakt mit dem Lösungsmittel gebracht wird. In dieser Ausgestaltung wird vorzugsweise in flüssiges Lösungsmittel verwendet.

Es hat sich gezeigt, dass es vorteilhaft ist, wenn das Lösungsmittel eine ähnliche oder gleiche Polarität aufweist wie das an der Oberfläche des Formteils vorhandene Polymer. Dies führt zu einem effektiven und effizienten Anlösen bzw. Quellen des Polymers.

Das Lösungsmittel kann ausgewählt werden aus der Gruppe umfassend Ketone, Aldehyde, Lactone, Lactame, Nitrile, Nitroverbindungen, tertiäre Carbonsäureamide, Harnstoffderivate, Sulfoxide, Sulfone, Kohlensäureester, Wasser, anorganischen Säuren, Alkohole, Amine, Carbonsäuren, primäre Amide, sekundäre Amide, Acetale, Halbacetale, halogenhaltige Kohlenwasserstoffe, und Kombinationen oder Mischungen hiervon. Diese polaren Lösungsmittel eignen sich besonders für polare Polymere, um diese erfindungsgemäß anzulösen bzw. quellen zu lassen.

Das Lösungsmittel kann aber auch ausgewählt werden aus der Gruppe umfassend Alkane, Alkene, Aromate, Carbonsäuren, Ester, Ether, Terpene, und Kombinationen oder Mischungen hiervon. Diese unpolaren Lösungsmittel eignen sich besonders für unpolare oder weniger polare Polymere, um diese erfindungsgemäß anzulösen bzw. quellen zu lassen.

Als besonders geeignet haben sich Lösungsmittel ausgewählt aus der Gruppe umfassend Benzylalkohol, Limonen, 1,8-Cineol, Ameisensäure, Dichlormethan, Dimethylsulfoxid, Isopropanol, Acetophenon, Formaldehyd-Dibutyl-Acetal, Dichloressigsäure, Schwefelsäure, Dimethylformamid, 1,1, 1,3,3,3-Hexafluor-2-propanol, m-Cresol, 2-Methyl-Tetrahydrofuran, und Kombinationen oder Mischungen hiervon, erwiesen.

Es können aber auch andere als die vorstehend genannten Lösungsmittel bzw. Lösungsmittelklassen verwendet werden. Erfindungsgemäß kann jedes Lösungsmittel oder Lösungsmittelkombination verwendet werden, das bzw. die dazu geeignet ist, die das Polymer aufweisenden Oberflächenabschnitte anzulösen bzw. quellen zu lassen, vorzugsweise ohne hierbei den Zuschlagstoff in Lösung zu bringen.

Vorteilhaft kann es sein, wenn das Lösungsmittel ein destillierbares Lösungsmittel ist. Das Lösungsmittel kann so mittels eines Destillationsverfahrens auf einfache Weise zurückgewonnen werden und muss nicht der Entsorgung zugeführt werden.

Der Glättschritt, d.h. der zweite Zeitraum, in dem der Glättschritt ausgeführt wird, kann unterschiedliche lange gewählt werden. Die konkrete Dauer des Glättschrittes hängt im Wesentlich vom Polymer und von dem Lösungsmittel ab und kann zwischen 1 Sekunde und 10 Stunden, vorzugsweise zwischen 5 Sekunden und 1 Stunde liegen.

Der zweite Zeitraum wird vorteilhafter Weise so gewählt, dass das Lösungsmittel das Polymer soweit anlösen bzw. quellen lassen kann, dass es eine Viskosität aufweist, die geeignet ist, dass das angelöste Polymer in die in dem Ätzschritt erzeugten Vertiefungen bzw. Hohlräume migrieren kann und diesen überdeckt und sich vorzugsweise gleichmäßig über die behandelte Oberfläche des Formteils verteilt.

Alternativ oder zusätzlich kann auch die Temperatur des Lösungsmittels angepasst werden, um eine geeignete Viskosität des angelösten Polymers zu erreichen.

Sowohl der zweite Zeitraum als auch die Temperatur des Lösungsmittels werden vorzugsweise in Abhängigkeit von
- dem Polymer P,
- gegebenenfalls von der Wandstärke des Formteils,
- der Größe des Formteils, d.h. von der Fläche der zu behandelnden Oberfläche,
- der ursprünglichen und/oder der gewünschten Oberflächenbeschaffenheit (zum Beispiel Porosität und/oder Rauheit) des Formteils, und/oder
- den in dem Ätzvorgang entstandenen Vertiefungen bzw. Hohlräume H gewählt, wobei eine oder mehrere dieser Eigenschaften berücksichtigt werden können.

So kann es beispielsweise erforderlich sein, den zweiten Zeitraum und / oder die Lösungsmitteltemperatur und/oder die Anzahl der Wiederholungen des Glättschrittes zu erhöhen, wenn in dem Ätzschritt großflächige Vertiefungen bzw. Hohlräume entstanden sind.

Der Glättschritt kann mehrfach wiederholt werden, wobei es vorteilhaft sein kann zumindest zwei aufeinander folgende Wiederholungen bei unterschiedlichen Lösungsmitteltemperaturen und unterschiedliche lange durchzuführen. Dadurch kann etwa der Prozess des Anlösens des Polymers in zwei aufeinanderfolgenden Glättschritten unterschiedlich ablaufen.

Als vorteilhaft hat es sich erwiesen, wenn die Lösungsmitteltemperatur auf eine Temperatur eingestellt wird, die gleich oder oberhalb des Siedepunktes Lösungsmittels liegt. Der Siedepunkt kann durch Veränderung des Druckes eingestellt werden. Vorteilhaft ist es, den Siedepunkt des Lösungsmittels mittels einer Druckreduzierung zu verringern (z.B. auf ein weitgehendes Vakuum), sodass der Glättschritt bei niedrigeren Lösungsmitteltemperaturn durchgeführt werden kann. Temperaturbedingte Beeinträchtigungen des Formteils während des Glättschrittes werden so effektiv vermieden. Zudem kann die Abkühlphase nach dem Glättschritt verkürzt werden.

Der Glättschritt kann in einem druckdichten Behälter durchgeführt werden, wobei der druckdichte Behälter mit einem Unterdruck beaufschlagt werden kann, wodurch der Siedepunkt des Lösungsmittels in dem druckdichten Behälter reduziert werden kann.

In Abbildung (c) der Fig. 2 ist das Ergebnis des mit Bezug auf Fig. 2 beschriebenen Verfahrens gezeigt. Das Formteil weist eine durchgehend glatte und homogene (d.h. weitestgehend aus einem Material bestehende) Oberfläche auf. Die Partikel des Zuschlagstoffes P an der Oberfläche O werden weitgehend von dem Polymer bedeckt. Je nach ursprünglicher Größe der Partikel des Zuschlagstoffes, der Länge und Gleichmäßigkeit des Ätzvorganges, der Aktivität des Ätzmittels und Lage der Partikel des Zuschlagstoffes in der Oberfläche sind die Restpartikel des Zuschlagstoffes (als Restpartikel werden die nach dem Ätzvorgang erhaltenen Partikel bezeichnet) entweder vollständig von dem Polymer überdeckt, wie am Beispiel des Partikels Z 1 gezeigt, oder nicht oder nur teilweise von dem Polymer überdeckt, wie am Beispiel des Partikels Z2 gezeigt. Das hier gezeigt Partikel Z2 bildet eine ebene Fläche mit dem das Partikel umgebenden Polymer. In einer anderen Ausgestaltung bildet das Partikel Z2 keine ebene Fläche mit dem das Partikel umgebenden Polymer (nicht gezeigt).

Sofern das Partikel Z2 oder ein (hier nicht gezeigtes) an der Oberfläche überstehendes Partikel des Zuschlagstoffes von dem Polymer überdeckt werden soll, kann es vorteilhaft sein, nach dem Glättschritt den Ätzschritt und den Glättschritt zu wiederholen, gegebenenfalls auch mehrfach.

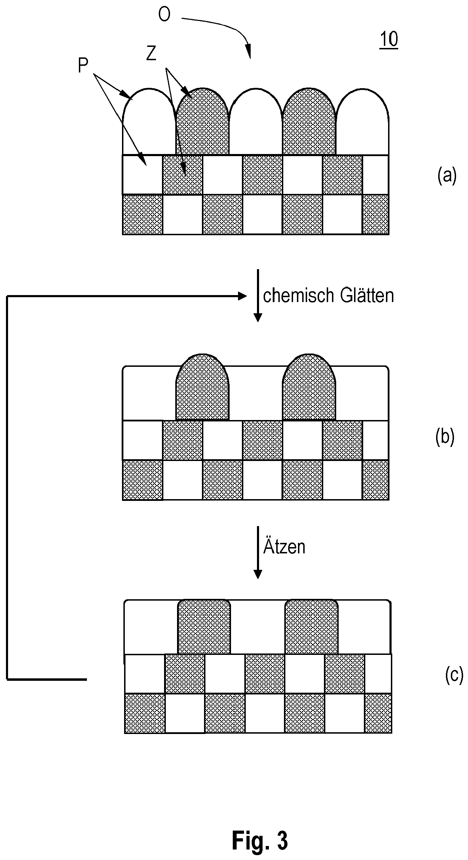

**Fig. 3** zeigt schematisch ein Blockdiagramm für einen Ablauf eines erfindungsgemäßen Verfahrens gemäß einer weiteren Variante.

Die in Fig. 3 gezeigte Variante unterscheidet sich von der mit Bezug auf Fig. 2 gezeigten Variante in der Reihenfolge des Ätzschrittes und des Glättschrittes. Während gemäß der in Fig. 2 gezeigten Variante zuerst der Ätzschritt und anschließend der Glättschritt durchgeführt werden, wird gemäß der in Fig. 3 gezeigten Variante zuerst der Glättschritt und anschließend der Ätzschritt durchgeführt.

Der Glättschritt und der Ätzschritt entsprechen hier dem Glättschritt und dem Ätzschritt gemäß der in Fig. 2 beschriebenen Variante des Verfahrens, weshalb hier nur die Unterschiede des Verfahrens nach Fig. 3 zum Verfahren nach Fig. 2 beschrieben werden.

In dem Glättschritt werden die das Polymer P aufweisende Abschnitte der Oberfläche mit dem Lösungsmittel angelöst (wie mit Bezug auf Fig. 2 beschrieben), sodass sich das angelöste Polymer vorzugsweise gleichmäßig an der Oberfläche (insbesondere zwischen den den Zuschlagstoff aufweisenden Abschnitten der Oberfläche) verteilt. Das Ergebnis des Glättschrittes ist in Abbildung (b) der Fig. 3 gezeigt.

Nach dem Glättschritt können an der Oberfläche des Formteils Partikel des Zuschlagstoffes Z sichtbar sein, insbesondere an der Oberfläche überstehen, weshalb die gesamte Oberfläche auch nach dem Glättschritt eine gewisse, durch die an der Oberfläche überstehenden Partikel des Zuschlagstoffes Z bedingte Rauheit aufweist.

Um diese, durch die an der Oberfläche überstehenden Partikel des Zuschlagstoffes Z bedingte Rauheit zu beseitigen, kann nach dem Glättschritt der Ätzschritt (wie oben mit Bezug auf Fig. 2 beschrieben) durchgeführt werden. In dem Ätzschritt werden die an der Oberfläche überstehenden Anteile der Partikel des Zuschlagstoffes entfernt, sodass sich eine insgesamt homogen glatte Oberfläche ergibt, wie in Abbildung (c) der Fig. 3 gezeigt. Vorteilhaft ist es hierbei, wenn die Prozessparameter des Ätzschrittes so eingestellt werden, dass nur die überstehenden Anteile der Partikel des Zuschlagstoffes entfernt werden.

In der Praxis hat sich gezeigt (dieser Fall ist in Fig. 3 nicht gezeigt), dass es Fälle gibt, in denen die Partikel des Zuschlagstoffes nach dem Drucken des Formteils nicht überall gleichweit an der Oberfläche überstehen, sodass nach dem Glättschritt einige Partikel des Zuschlagstoffes mehr als andere Partikel des Zuschlagstoffes an der Oberfläche überstehen. Hier kann es vorteilhat sein, die Prozessparameter des Ätzschrittes so zu wählen, dass keine Partikel des Zuschlagstoffes an der Oberfläche überstehen. Dabei kann es allerdings vorkommen, dass einige Partikel des Zuschlagstoffes soweit entfernt werden, dass sich Vertiefungen in der das Polymer aufweisenden Oberfläche ausbilden. Um diese Vertiefungen zu beseitigen kann der Glättschritt wiederholt werden.

Auch bei der in Fig. 3 gezeigten Variante des erfindungsgemäßen Verfahrens können der Glättschritt und der Ätzschritt (gegebenenfalls mehrfach) wiederholt werden.

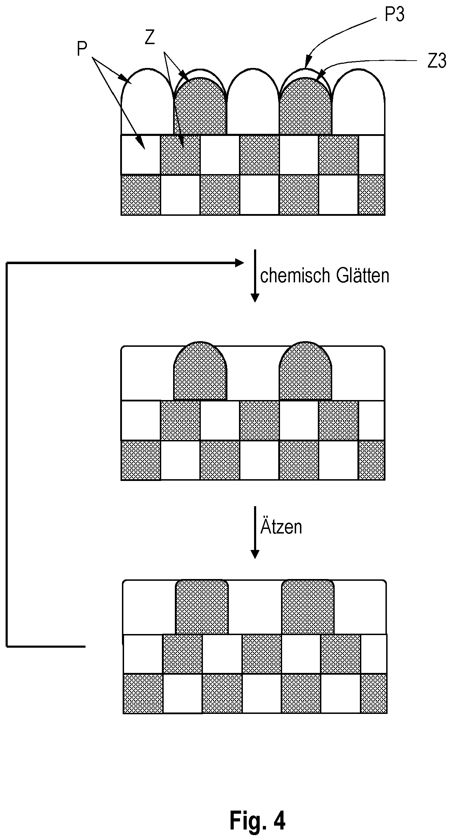

**Fig. 4** zeigt schematisch ein Blockdiagramm für einen Ablauf eines erfindungsgemäßen Verfahrens gemäß einer weiteren Variante.

Das mit Bezug auf Fig. 4 beschriebene Verfahren entspricht dem mit Bezug auf Fig. 3 beschriebenen Verfahren. Diese beiden Verfahren unterscheiden sich lediglich in dem Formteil, dessen Oberfläche geglättet werden soll.

Während bei dem Verfahren nach Fig. 3 Partikel des Zuschlagstoffes an der Oberfläche des zu glättenden Formteils (Abbildung (b) der Fig. 3) mit bloßem Auge oder unter dem Mikroskop sichtbar sind bzw. an der Oberfläche überstehen und nicht von dem Polymer bedeckt sind, sind bei dem Verfahren nach Fig. 4 keine Partikel des Zuschlagstoffes an der Oberfläche des zu glättenden Formteils sichtbar. Nicht sichtbar bedeutet herbei, dass die Partikel des Zuschlagstoffes von dem Polymer bedeckt sind, wie am Beispiel des Partikel Z3 gezeigt, das mit einer Polymerschicht P3 bedeckt ist. Im Fall eines (teilweise) transparenten Polymers kann das Partikel Z3 dennoch optisch sichtbar sein. Solche oberflächennahe Feststoffpartikel können die Oberflächenrauheit unvorteilhafterweise erhöhen.

Wie beim Verfahren nach Fig. 4 wird hier zunächst der Glättschritt durchgeführt. Das in dem Glättschritt verwendete Lösungsmittel bewirkt, dass die Polymeroberfläche des Formteils angelöst wird und sich der angelöste Anteil der Polymeroberfläche vorzugsweise gleichmäßig auf der Oberfläche verteilt. Hierbei werden auch jene Bereiche der Polymeroberfläche angelöst, die die an der Oberfläche vorhandenen Partikel des Zuschlagstoffes überdecken. Dies kann dazu führen, dass die zunächst von dem Polymer überdeckten Partikel des Zuschlagstoffes freigelegt werden, d.h. nach dem Glättschritt nicht mehr oder nicht mehr vollständig von dem Polymer verdeckt werden und daher an der bereits mit polymeraktiven Mittel behandelten Polymeroberfläche überstehen, wie in Abbildung (b) der Fig. 4 gezeigt.

Um diese überstehenden Partikel des Zuschlagstoffes bzw. die an der Oberfläche überstehenden Anteile der Partikel des Zuschlagstoffes zu entfernen, kann im Anschluss an den Glättschritt ein Ätzschritt durchgeführt werden, der dem Ätzschritt entspricht, wie er mit Bezug auf Fig. 3 beschrieben wird.

In der Praxis hat sich hierbei gezeigt (dieser Fall ist in Fig. 4 nicht gezeigt), dass es Fälle gibt, in denen nicht alle Partikel des Zuschlagstoffes gleichmäßig dick bzw. stark von dem Polymer überdeckt sind, sodass nach dem Glättschritt einige der freigelegten Partikel des Zuschlagstoffes mehr als andere freigelegte Partikel des Zuschlagstoffes an der Oberfläche überstehen. Hier kann es vorteilhat sein, die Prozessparameter des Ätzschrittes so zu wählen, dass keine Partikel des Zuschlagstoffes an der Oberfläche überstehen. Dabei kann es allerdings vorkommen, dass einige Partikel des Zuschlagstoffes soweit entfernt werden, dass sich Vertiefungen in der das Polymer aufweisenden Oberfläche ausbilden. Um diese Vertiefungen zu beseitigen kann der Glättschritt wiederholt werden.

Auch bei der Variante gemäß Fig. 4 kann es vorteilhaft sein den Glättschritt und den Ätzschritt (gegebenenfalls mehrfach) zu wiederholen.

Vorstehend sind mit Bezug auf Fig. 1 bis Fig. 4 bevorzugte Ausgestaltungen des erfindungsgemäßen Verfahrens beschrieben worden, die einen Ätzschritt (Fig. 1) bzw. einen Ätzschritt und einen Glättschritt (Fig. 2 bis Fig. 4) umfassen.

In der Praxis hat sich gezeigt, dass eine Oberfläche auch mehrere Oberflächentypen (entsprechend den jeweiligen Abbildungen (a) in Fig. 1 bis Fig. 4) aufweisen kann (Zuschlagstoff komplett von dem Polymer verdeckt, Zuschlagstoff ist an der Oberfläche sichtbar, Zuschlagstoff steht aus der Oberfläche hervor). Hierbei kann es vorteilhaft sein, die Reihenfolge und die Anzahl der Ätzschritte und/oder der Glättschritte, sowie die jeweiligen Prozessführungen bzw. Prozessparameter an die jeweilige vorhandene Oberflächenerscheinung und gewünschte Oberflächenerscheinung anzupassen.

Vorteilhafte Weiterbildungen des erfindungsgemäßen Verfahrens können weitere, nachfolgend genannte Schritte umfassen, die einerseits jeweils optional sind und andererseits miteinander und mit dem Ätzschritt und / oder Glättschritt kombiniert werden können.

### Erster Trocknungsschritt

Gemäß einer Variante des erfindungsgemäßen Verfahrens kann es vorgesehen sein, das Formteil nach dem Ätzschritt zu trocknen (erster Trocknungsschritt). Für den Fall, dass ein nachfolgender Glättschritt vorgesehen ist, wird der erste Trocknungsschritt vor dem Glättschritt durchgeführt.

Der erste Trocknungsschritt wird vorzugsweise bei einer Temperatur zwischen 10°C und 180°C, besonders bevorzugt bei einer Temperatur zwischen 90°C und 110°C durchgeführt.

Optional kann der erste Trocknungsschritt unterhalb des Umgebungsdruckes, vorzugweise bei einem weitgehenden Vakuum durchgeführt werden. Hierbei können druckdichte Trocknungsvorrichtungen verwendet werden. Der erste Trocknungsschritt kann optional auch in derselben Vorrichtung erfolgen, wie der Ätzschritt und/oder der Glättschritt.

Wird der Ätzschritt (gegebenenfalls mehrfach) wiederholt, kann es vorgesehen sein, zwischen einigen oder zwischen jeder Wiederholung den ersten Trocknungsschritt durchzuführen. Die Prozessparameter (z.B. Dauer, Temperatur und Druck) des ersten Trocknungsschrittes können hierbei jeweils verändert bzw. angepasst werden.

Die Temperatur in dem ersten Trocknungsschritt wird vorzugsweise so gewählt, dass sie unter der Schmelztemperatur des Polymers, besonders bevorzugt unter der Erweichungstemperatur des Polymers liegt.

### Zweiter Trocknungsschritt

Gemäß einer weiteren Variante des erfindungsgemäßen Verfahrens kann es vorgesehen sein, das Formteil nach dem Glättschritt zu trocknen (zweiter Trocknungsschritt). Für den Fall, dass ein nachfolgender Ätzschritt vorgesehen ist, wird der zweite Trocknungsschritt vor dem Ätzschritt durchgeführt.

Der zweite Trocknungsschritt wird vorzugsweise bei einer Temperatur zwischen 10°C und 180°C, besonders bevorzugt bei einer Temperatur zwischen 20°C und 100°C durchgeführt.

Optional kann der zweite Trocknungsschritt unterhalb des Umgebungsdruckes, vorzugweise bei einem weitgehenden Vakuum (etwa bei einem Druck unterhalb von 900 mbar) durchgeführt werden. Hierbei können druckdichte Trocknungsvorrichtungen verwendet werden. Der zweite Trocknungsschritt kann optional auch in derselben Vorrichtung erfolgen, wie der Ätzschritt und/oder der Glättschritt.

Die Temperatur in dem zweiten Trocknungsschritt wird vorzugsweise so gewählt, dass sie unter der Schmelztemperatur des Polymers, besonders bevorzugt unter der Erweichungstemperatur des Polymers liegt.

Der Druck in dem zweiten Trocknungsschritt wird so gewählt, dass die Kombination aus Druck und Temperatur in dem zweiten Trocknungsschritt ein effizientes Entweichen des Lösungsmittels aus der angelösten bzw. gequollenen Polymeroberfläche ermöglichen (d.h. ein Entweichen vorzugsweise innerhalb eines vorbestimmten Zeitraumes ermöglichen). Ein Druck unterhalb des Umgebungsdruckes bei dem zweiten Trocknungsschritt ermöglicht es die Temperatur zu reduzieren und dennoch ein effizientes Entweichen des Lösungsmittels aus der angelösten Polymeroberfläche zu gewährleisten.

Bei den genannten Temperatur- und Druckbereichen für den zweiten Trocknungsschritt erfolgt kein großer Energieeintrag in das Formteil. Dies hat den Vorteil, dass insbesondere thermoplastische Formteile ihre Form nicht verändern. Ein weiterer Vorteil liegt darin, dass Energiekosten eingespart werden können. Dies ermöglicht beispielsweise die Massenproduktion oder einen hohen Durchsatz bei der Behandlung eines Formteils mit dem erfindungsgemäßen Verfahren. Für ein Lösungsmittel mit einem Siedepunkt von etwa 200°C kann der zweite Trocknungsschritt beispielsweise bei einem Druck von 20 mbar und einer Temperatur von 80°C effizient durchgeführt werden.

Werden zum erfindungsgemäßen Bearbeiten der Oberfläche eines Formteils sowohl der Ätzschritt als auch der Glättschritt durchgeführt, können sowohl der erste Trocknungsschritt als auch der zweite Trocknungsschritt durchgeführt werden. In einer Ausgestaltung der Erfindung kann auch auf einen der beiden Trocknungsschritte verzichtet werden.

### Mechanisches Bearbeiten der Oberfläche

Vor und/oder nach dem Ätzschritt und/oder vor und/oder nach dem Glättschritt kann die Oberfläche des Formteils mechanisch aufbereitet werden. Beispielsweise kann die Oberfläche gestrahlt werden, um beispielsweise überschüssiges Pulver zu entfernen und/oder die Oberfläche zu verdichten und/oder die Oberfläche zu mattieren und/oder die Oberfläche aufzurauen.

Vor dem Ätzschritt und/oder dem Glättschritt können die Formteile mit einem Kunststoffstrahlmittel, besonders bevorzugt mit PC4, entpulvert werden.

Vor und/oder nach dem Ätzschritt und/oder vor und/oder nach dem Glättschritt kann die Oberfläche des Formteils mit einem Strahlmittel, vorzugsweise mit Kunststoffkugeln, gestrahlt werden, um dadurch ein Verdichten der Oberfläche zu erreichen. Vorteilhaft ist es hierbei, wenn die Kunststoffkugeln einen geringeren oder gleichen Härtegrad aufweisen als bzw. wie das Polymer. Dadurch kann ein Verdichten der Oberfläche gewährleistet werden, ohne dass die Oberfläche beschädigt oder Material von der Oberfläche abgetragen wird.

Das Strahlen der Oberfläche hat zusätzlich zum Verdichten der Oberfläche den Vorteil, dass die das Polymer aufweisenden Oberflächenabschnitte homogenisiert werden, d.h. die Rauheit um einen gewissen Grad reduziert wird, wodurch sich die Dauer des Glättschrittes reduzieren lässt.

Das Strahlen der Oberfläche mit einem Strahlmittel kann
- vor dem Ätzschritt und/oder
- nach dem Ätzschritt und vor dem Glättschritt und/oder
- nach dem Glättschritt
durchgeführt werden.

Ein Strahlen mit einem Strahlmittel, beispielweise mit einem Glasstrahlmittel, Kunststoffstrahlmittel, Keramikstrahlmittel, Metallstrahlmittel, insbesondere mit Metallkugeln und anderen Metallpartikeln, nach dem Ätzschritt und vor dem Glättschritt kann den zusätzlichen Vorteil haben, dass die Partikel des Zuschlagstoffes weiter in die Oberfläche des Formteils gehämmert werden können, sodass sie noch tiefer in der Oberfläche verankert sind. Dadurch könnte die Prozessführung von einem oder beiden Schritten (Ätzschritt und Glättschritt) vorzugsweise vorteilhafterweise beeinflusst werden, beispielsweise durch Reduzierung der Dauer des Glättschrittes. In einer Ausgestaltung der Erfindung führt das Strahlen nach dem Ätzschritt zu einer derart glatten Oberfläche, dass sich der Glättschritt erübrigt.

In einer Ausgestaltung der Erfindung kann es vorgesehen sein, nach dem Glättschritt (gegebenenfalls nach dem letzten Glättschritt, wenn dieser mehrfach durchgeführt wird) die Oberfläche mit Glasstrahlmittel zu strahlen. Damit kann eine Mattierung der Oberfläche erreicht werden.

Das mechanische Aufbereiten der Oberfläche kann auch ein Schleifen und/oder Trowalisieren und/oder ein anderes Polierverfahren der Oberfläche, insbesondere vor dem Ätz- und/oder Glättschritt, umfassen. Damit können sehr raue Oberflächenbereiche vorgeglättet werden, um einen effizienten Ätz- und/oder Glättschritt zu gewährleisten.

### Färben, Imprägnieren, Lackieren der Oberfläche

In einer Ausgestaltung der Erfindung kann es vorgesehen sein, die Oberfläche des Formteils vor und/oder nach dem Ätz- und/oder Glättschritt zu färben und/oder zu imprägnieren und/oder zu lackieren.

Je nach gewünschter Ästhetik der Oberfläche des Formteils kann das Färben der Oberfläche vor dem Ätzschritt, nach dem Ätzschritt und vor dem Glättschritt, oder nach dem Glättschritt durchgeführt werden.

Wird der Glättschritt mehrfach wiederholt, kann das Färben der Oberfläche auch zwischen den einzelnen Glättschritten durchgeführt werden, wodurch eine Farbaufnahme in tiefere Oberflächenschichten des Polymers erreicht werden kann.

Vorteilhaft kann es sein, wenn die Oberfläche des Formteils vor dem Färben mit Kunststoffkugeln gestrahlt wird (wie vorstehend beschrieben). Dies hat den Vorteil, dass eine besonders homogene Farbaufnahme in der Polymeroberfläche erreicht wird, was zu einem besonders homogenen Färbebild führt. Wird ein Formteil derart einem Ätzschritt und einem Glättschritt unterzogen, dass die daraus resultierende Oberfläche des Formteils vollständig von dem Polymer überzogen ist, können damit auch bei Verwendung eines Zuschlagstoffes bei der Herstellung des Formteils besonders homogen gefärbte Formteil bereitgestellt werden.

In einer weiteren Ausgestaltung der Erfindung kann es vorgesehen sein, die Oberfläche des Formteils chemisch zu mattieren, was beispielsweise nach dem Glättschritt erfolgt.

In einer weiteren Ausgestaltung der Erfindung kann es vorgesehen sein, das Formteil vor und/oder nach dem Ätzschritt und/oder vor und/oder nach dem Glättschritt in einem Ofen oder in einem Vakuumofen aufzuheizen.

In einer weiteren Ausgestaltung der Erfindung kann es vorgesehen sein, das Formteil nach dem Ätzschritt und/oder nach dem Glättschritt einer Reinigung zu unterziehen, etwa in einem Reinigungsbad und/oder einem Ultraschallbad. Vorzugsweise erfolgt die Reinigung in Wasser, vorzugsweise in demineralisiertem Wasser.

In einer weiteren Ausgestaltung der Erfindung kann es vorgesehen sein, ein Teil der Oberfläche zu maskieren oder abzukleben, sofern nur ein bestimmter Abschnitt der Oberfläche des Formteils mit dem erfindungsgemäßen Verfahren behandelt werden soll.

In einer Ausgestaltung der Erfindung wird zum Herstellen (z.B. zum Drucken) des Formteils, das gemäß dem vorstehend beschriebenen Verfahren behandelt wird, ein Polymer verwendet, das ausgewählt wird aus der Gruppe umfassend thermoplastische Elastomere, thermoplastische Elastomere auf Urethan-Basis, thermoplastische Polyamidelastomere, thermoplastische Copolyesterelastomere, thermoplastische Elastomere auf Olefin-Basis, thermoplastische Styrol-Blockcopolymere, Polyoxymethylene, Polyethylenterephthalate, Polyethylenterephthalat-Glycole, Polyetherblockamide, Polyethylenfuranoate, Polyurethane, Acryl-Nitril-Butadien-Styrole, thermoplastische Polyamide, Photopolymere, Triblock-Polymere aus Polystyrol und Poly(ethylenoxid)-Blöcke, Polyamide, Polyester, Polyolefine, Polyacrylate, Polyvinylamine, Polyacrylamide, Polymethyl(meth)acrylate, Polyether, Polycarbonate, Polylactide, Polyethersulfone, Polysulfone, Polyphenylsulfone, Polyimide, Polyetherimide, Polyketone, Polyetherketone, Styrolpolymere, Styrolblockpolymere, Acrylnitrilstyrolacrylate, Copolymere, und Blends oder Mischungen hiervon.

In einer Ausgestaltung der Erfindung wird zum Herstellen (z.B. zum Drucken) des Formteils, das gemäß dem vorstehend beschriebenen Verfahren behandelt wird, ein Zuschlagstoff verwendet, der ausgewählt wird aus der Gruppe umfassend natürliche und synthetische Polymere, Keramiken, Talke, Quarze, Metalle, Stahl, Legierungen, Gläser, Mineralien, Farbstoffe, Gummis, Holz, Graphit, Aktivkohle, Farbstoffe, Ruß, und Kombinationen und Mischungen hiervon.

Vorzugsweise kann der Zuschlagstoff eine Ausgestaltung haben, die ausgewählt ist aus der Gruppe, umfassend Pulver, Puder, Mehl, Granulate, Körner, Kugel, Partikel, Partikelagglomerate, anderen Schüttguten, Kern-Schale-Strukturen, Röhrchen, Fasern, Watte, Ketten, Fäden, Stoffen, Textilien, Netzen, Netzstoffen, Mesh-Geweben, Seilen, Schrauben, Federn, Schraubenfedern, Nadeln, Stecknadeln, Knäueln, Einfügungen (Inserts), Lamellen und Kombinationen hiervon.

Vorzugsweise wird das Metall ausgewählt aus der Gruppe umfassend Titan, Aluminium, Kupfer, Nickel, Kobalt, Eisen, Molybdän, Magnesium, Tantal, Chrom, Wolfram, Zink, Gold, Silber, Zinn, Platinum, Zirkonium, Legierungen hiervon mit anderen Metallen und Nichtmetallen, beispielsweise Bronze, und Kombinationen hiervon.

Die Metalle können jeweils als deren Oxide, Carbide, Nitride, Boride oder andere Verbindungen vorliegen.

Als besonders vorteilhaftes Polymer hat sich Polyamid-12 (PA 12) und als besonders vorteilhafter Zuschlagstoff haben sich Aluminiumpartikel erwiesen.

Der Zuschlagstoff wird vorzugsweise in Partikelform oder Pulverform zum Herstellen des Formteils verwendet.

Vorteilhaft ist es, wenn der Zuschlagstoff und das Polymer Bestandteile des Werkstoffes (z.B. des Druckmaterials für 3D-Drucker, oder des Granulats für Spritzgussverfahren) sind, aus dem das Formteil hergestellt wird.

In einer vorteilhaften Ausgestaltung der Erfindung werden die Formteile aus Alumide hergestellt. Alumide ist ein Pulverwerkstoff, der aus einer Mischung von PA 12 und einem Aluminiumpulver besteht. Der PA-12 Anteil wird beim Herstellen des Formteils (z.B. beim Druckvorgang in einem 3D-Drucker) verschmolzen und bindet das Aluminiumpulver.

Ein geeignetes Ätzmittel für das im Alumide enthaltenen Aluminiumpulver ist eine wässrige Natronlauge. Geeignete Lösungsmittel für Polyamide sind beispielsweise Benzylalkohol, N-Methyl-2-pyrrolidon (NMP) und andere polare Lösungsmittel.

Alternativ hierzu oder zusätzlich kann der Zuschlagstoff auch nach dem Herstellen des Formteils aus einem Polymer (z.B. mit einem 3D-Drucker) in dessen Oberfläche eingebracht werden, etwa in Form eines Metalldrahtes, Kette oder Nadel. In einer Ausgestaltung der Erfindung ist es vorgesehen, den Zuschlagstoff, insbesondere ein Metallpulver oder Metallpartikel nach dem Herstellen des Formteils aus einem Polymer mittels eines Strahlverfahrens in dessen Oberfläche absichtlich oder unabsichtlich einzubringen.

Das erfindungsgemäße Verfahren kann auch bei Formteilen angewandt werden, die nicht in einem 3D-Druckverfahren hergestellt worden sind. So kann das erfindungsgemäße Verfahren auch bei Spitzgussformteilen, bei gefrästen Formteilen oder bei Tiefzieh-Formteilen, die jeweils aus einer Kombination aus einem Polymer und einem Zuschlagstoff bestehen, angewandt werden.

Ein besonderer Vorteil des erfindungsgemäßen Verfahrens besteht darin, dass Formteile, die unter Verwendung eines mit zumindest einem Zuschlagstoff versehenen Polymers hergestellt werden (etwa im 3D-Druck), geglättet und versiegelt werden können, ohne dass auf die überlegenen Eigenschaften von Mehrkomponenten-Polymermischungen verzichtet werden muss.

Bei dem erfindungsgemäß behandelten Formteil kann es sich beispielsweise um eine Form, die fürs Thermoformen und/oder Spritzgießen verwendet wird, insbesondere eine Tiefziehform oder eine Vakuumspritzgußform, handeln. Eine raue Oberfläche der Form würde einen Abdruck/Muster auf dem hergestellten Endprodukt hinterlassen. Die nach dem erfindungsgemäßen Verfahren behandelte Formteile weisen vorteilhafterweise verringerte Oberflächenrauheit auf.

Bei dem erfindungsgemäß behandelten Formteil kann es sich beispielsweise um ein Schmuckstück handeln. Die nach dem erfindungsgemäßen Verfahren behandelte Formteile weisen vorteilhafte Ästhetik und Haptik auf.

Insbesondere kann es sich bei dem erfindungsgemäß behandelten Formteil um einen Formteil handeln, das in Windkanaltests zum Einsatz kommt.

Bei Windkanaltests ist es üblich ein Objekt (z.B. einen Rückspiegel eines PKW) in verschiedenen Geometrien zu testen, um eine optimale Form für das jeweilige Objekt zu ermitteln. Hierbei ist es vorteilhaft, die unterschiedlichen Geometrien des Objektes im 3D-Druck herzustellen, da diese schneller und kostengünstiger verfügbar sind. Es hat sich gezeigt, dass aus einem Polymer gedruckte Objekte nicht immer die erforderliche Steifigkeit und Stabilität aufweisen, um das Objekt unter Extrembedingungen im Windkanal zu testen. Es ist daher vorteilhaft, dem Polymer einen Zuschlagstoff zuzugeben, der die Steifigkeit und Stabilität des gedruckten Objektes erhöht. Um möglichst genaue Testergebnisse zu erhalten ist es wünschenswert, wenn die Oberfläche des zu testenden Objektes möglichst die gleichen Eigenschaften aufweist (insbesondere gleich glatt ist) wie das spätere Serienprodukt. Die vorliegende Erfindung ermöglicht es nun erstmals die Oberfläche von Objekten, die unter Verwendung eines mit zumindest einen Zuschlagstoff versehenen Polymers in einem 3D-Druckverfahren hergestellt wurden, so zu glätten, ihre Oberfläche weitgehend die gleichen Eigenschaften aufweist (insbesondere gleich glatt ist) wie das spätere Serienprodukt.

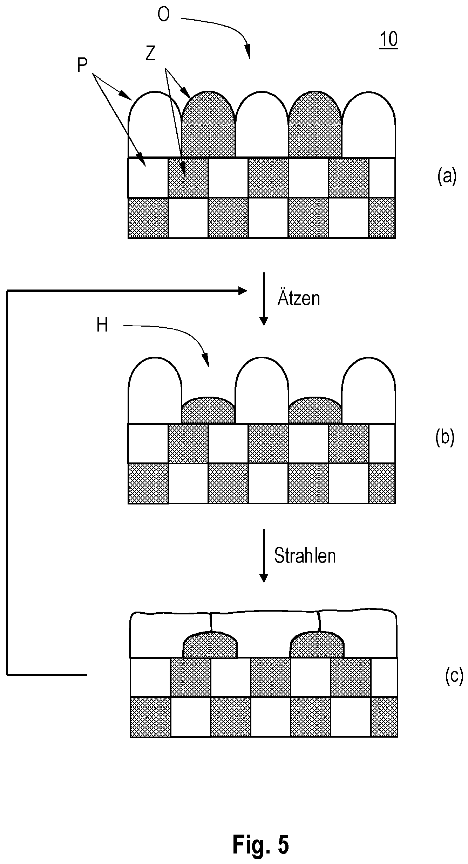

**Fig. 5** zeigt schematisch ein Blockdiagramm für einen Ablauf eines erfindungsgemäßen Verfahrens gemäß einer alternativen Variante.

Bereitgestellt wird ein Formteil 10, das in einem additiven Fertigungsverfahren (3D-Druckverfahren) herstellt worden ist, wobei hier lediglich ein Ausschnitt des Formteils 10 gezeigt ist.

Das Formteil wurde mit einem zumindest einen Zuschlagstoff Z versehenen bzw. aufweisenden Polymer P hergestellt. Der Zuschlagstoff Z ist hier weitgehend homogen in dem Formteil und an der Oberfläche O des Formteils 10 verteilt. Der Zugschlagstoff kann aber auch nicht-homogen verteilt sein und insbesondere von der in den Figuren gezeigten Verteilung abweichen. Bei dem Zuschlagstoff kann es sich beispielsweise um ein Metall handeln. Nachfolgend wird die Erfindung anhand eines Metalls als Zuschlagstoff beschrieben, wobei die Erfindung nicht hierauf begrenzt ist.

Abbildung (a) zeigt die Oberfläche O des Formteils 10, bevor sie mit dem erfindungsgemäßen Verfahren behandelt worden ist. Erkennbar ist hier deutlich die raue Oberfläche O des Formteils 10, die Abschnitte aus dem Polymer P und Abschnitte aus dem Zuschlagstoff Z bzw. aus dem Metall aufweist. Die Abschnitte aus dem Zuschlagstoff Z bzw. aus dem Metall sind hier an der Oberfläche des Formteils mit bloßem Auge oder unter dem Mikroskop sichtbar.

Gemäß der in Fig. 5 gezeigten Variante umfasst das erfindungsgemäße Verfahren im Wesentlichen zwei Schritte, nämlich
- ein Ätzen (Ätzschritt) der Oberfläche und
- ein Strahlen (Strahlschritt) der Oberfläche,
wobei gemäß der in Fig. 5 gezeigten Variante zunächst der Ätzschritt und anschließend der Strahlschritt ausgeführt werden. Diese beiden Schritte werden nachfolgend im Detail beschrieben.

### Ätzschritt

In dem Ätzschritt wird die Oberfläche des Formteils für einen ersten Zeitraum in Kontakt mit einem eine erste Temperatur aufweisenden zuschlagstoffaktiven Mittel gebracht. Durch dieses Inkontaktbringen der Oberfläche mit dem zuschlagstoffaktiven Mittel (Ätzmittel) wird der an der Oberfläche vorhandene Zuschlagstoff bzw. Metall zumindest teilweise von der Oberfläche entfernt. Vorzugsweise wird durch das Ätzmittel der an der Oberfläche des Formteils vorhandene Zuschlagstoff zumindest anteilig in Lösung gebracht, und der in Lösung gebrachte Anteil des Zuschlagstoffes wird von der Oberfläche des Formteils entfernt. Das Ätzmittel und der darin enthaltene und in Lösung gebrachte Anteil des Zuschlagstoffes werden anschließend von der Oberfläche entfernt. Das Ätzmittel wird hierbei so gewählt, dass es bevorzugt nur den Zuschlagstoff in Lösung bringt.

Als Ergebnis des Ätzschrittes erhält man ein Formteil mit einer Oberfläche O, bei der der Zuschlagstoff zumindest teilweise von der Oberfläche entfernt worden ist. Dieses Ergebnis des Ätzschrittes ist in Abbildung (b) der Fig. 5 gezeigt. Durch das zumindest teilweise Entfernen des Zuschlagstoffes Z von der Oberfläche O bilden sich zwischen den das Polymer P aufweisenden Oberflächenabschnitten Vertiefungen bzw. Hohlräume H, wodurch sich die Rauigkeit der Oberfläche zunächst gegebenenfalls erhöhen kann.

Sofern nur ein bestimmter Abschnitt der Oberfläche des Formteils mit dem erfindungsgemäßen Verfahren behandelt werden soll, ist es vorteilhaft, wenn nur dieser Abschnitt der Oberfläche in Kontakt mit dem Ätzmittel gebracht wird.

Das Ätzmittel kann in unterschiedlichen Aggregatzuständen (etwa in flüssiger, gasförmiger oder dampfförmiger Form), als Aerosol, als Gasgemisch oder als flüssige Lösung in Kontakt mit der Oberfläche gebracht werden. Beispielsweise kann das zu behandelnde Formteil in ein Ätzmittel-Tauchbad gegeben werden, mit dem Ätzmittel bedampft oder besprüht werden. Hierbei können an sich bekannte Vorrichtungen verwendet werden, etwa Tauchbadvorrichtungen, Bedampfungsvorrichtunen, Spritz- bzw. Sprühvorrichtungen oder dergleichen.

In einer besonderen Ausgestaltung der Erfindung kann das Formteil selbst den Behälter für das Ätzmittel bilden (etwa ein Wannenförmiges Formteil oder ein Formteil mit einem Hohlraum, in den das Ätzmittel aufgenommen werden kann). Hierbei kann es vorgesehen sein, dass nur die Innenwandung des Wannenförmiges Formteils bzw. des Hohlraumes in Kontakt mit dem Ätzmittel gebracht wird.

Vorzugsweise wird das Ätzmittel ausgewählt aus der Gruppe umfassend organische Säuren, organische Basen, organische Amine, organische Salze, organische Hydroxide, amphotere Verbindungen, Mineralsäuren, anorganische Säuren, anorganische Basen, anorganische Salze, Ammoniak, Alkalimetallcarbonate, Alkalimetalldicarbonate, Alkalinetallhypochlorite, Alkalimetallhydroxide, Erdalkalimetallhydroxide, Ammoniumhydroxide, Verbindungen mit vergleichbaren Eigenschaften, wie die vorgenannten, und Kombination bzw. Gemische hiervon. Als besonders geeignet haben sich Alkalimetallhydroxide, insbesondere Natriumhydroxid erwiesen.

Weiter hat es sich als vorteilhaft herausgestellt, wenn das zuschlagstoffaktive Mittel bzw. das Ätzmittel als zuschlagstoffaktives Gemisch in Kontakt mit der Oberfläche gebracht wird, wobei das zuschlagstoffaktive Gemisch ein Trägermedium, etwa ein Lösungsmittel, und das zuschlagstoffaktive Mittel umfasst. Als Trägermedium bzw. Lösungsmittel für das Ätzmittel kann hierbei Wasser verwendet werden. Andere geeignete Lösungsmittel können bei Bedarf ebenfalls verwendet werden, wobei es vorteilhaft ist, wenn das hierfür verwendet Lösungsmittel das Polymer nicht anlöst. Es können auch andere Hilfsmittel in dem zuschlagstoffaktiven Gemisch enthalten sein, die z.B. die Auftragfähigkeit, die Streichfähigkeit, die Filmbildung, die Lubrikation und/oder die Lagerfähigkeit des Gemisches verbessern und/oder die Lösung des Zuschlagstoffes verbessern (z.B. Komplexbildner).

Der Anteil des zuschlagstoffaktiven Mittels bzw. Ätzmittels in dem zuschlagstoffaktiven Gemisch beträgt bezogen auf das Gesamtgewicht des zuschlagstoffaktiven Gemischs 1 bis 90 Gew.-%, vorzugsweise 10 bis 60 Gew.-%. Durch Anpassen des Lösungsmittelanteils in dem zuschlagstoffaktiven Gemisch kann in vorteilhafterweise die Intensität bzw. Stärke des Ätzvorganges in dem Ätzschritt eingestellt werden. Das ist insbesondere dann vorteilhaft ist, wenn nur ein sehr geringer Anteil des Zuschlagstoffes von der Oberfläche entfernt werden soll, sodass mit einem geringeren Anteil von Ätzmittel in dem Gemisch die Intensität des Ätzvorganges entsprechend reduziert werden kann. Gegebenenfalls ist es aber auch möglich das Ätzmittel direkt, d.h. ohne ein Trägermedium, etwa Lösungsmittel, in Kontakt mit der zu behandelnden Oberfläche zu bringen.

Der Ätzschritt, d.h. der erste Zeitraum, in dem der Ätzschritt ausgeführt wird, kann unterschiedliche lange gewählt werden. Die effektive Dauer des Ätzschrittes kann von dem verwendeten Zuschlagstoff, von dem verwendeten Ätzmittel, von dem Anteil des Ätzmittels in dem Gemisch und gegebenenfalls von der Temperatur des Ätzmittels abhängen. Bevorzugt beträgt der erste Zeitraum zwischen 1 Sekunde und 24 Stunden, besonders bevorzugt zwischen 1 Stunde und 4 Stunden. Der erste Zeitraum kann gegebenenfalls reduziert werden, indem der Anteil an Ätzmittel in dem Gemisch erhöht wird.

Der Ätzschritt kann ferner bei unterschiedlichen Temperaturen durchgeführt werden. Temperaturen zwischen 1°C und 90°C, bevorzugt zwischen 20°C und 70°C haben sich als vorteilhaft erwiesen. In einer Ausgestaltung der Erfindung kann der Ätzschritt mehrmals wiederholt werden, wobei die Temperatur des Ätzmittels oder die chemische Zusammensetzung des Ätzmittels bei jeder Wiederholung verschieden zur vorhergehenden Wiederholung sein kann. Wird die chemische Zusammensetzung des Ätzmittels bei jeder Wiederholung geändert, können mit jeder Wiederholung andere Zuschlagstoffe aus der Oberfläche des Formteils entfernt werden.

In einer alternativen Ausgestaltung kann die Temperatur des Ätzmittels während des Ätzschrittes erhöht oder reduziert werden. In beiden Fällen kann so ein Temperaturverlauf des Ätzmittels erreicht bzw. eingestellt werden, der für den Ätzvorgang bzw. die Steuerung des Ätzvorganges vorteilhaft ist. So kann beispielsweise die Intensität bzw. Stärke des Ätzvorganges über die Zeit angepasst werden. Damit kann beispielsweise durch das Reduzieren der Ätzmitteltemperatur über die Zeit die Intensität des Ätzvorganges über die Zeit reduziert werden, sodass ein sehr präzises Ätzen möglich ist. Umgekehrt kann eine Erhöhung der Ätzmitteltemperatur über die Zeit zu einer Erhöhung der Ätzrate (Intensität) über die Zeit führen. In einer anderen Ausführung wird die Ätzrate absichtlich nicht kontrolliert und nicht eingestellt. In einer anderen Ausführung wird die Ätzrate durch den Verbrauch des Zuschlagstoffes kontrolliert, sodass der Ätzvorgang ohne Zutun gestoppt wird, sobald der erreichbare Zuschlagstoff chemisch umgewandelt bzw. gelöst ist.

Eine erhöhte Temperatur sorgt für eine schnellere Reaktion zwischen Ätzmittel und Metall und eine verbesserte Löslichkeit des entstehenden Produktes - der Ätzvorgang kann so verkürzt werden. Dabei ist aber darauf zu achten, dass die tieferliegende Metallpartikel (d.h. die "unterhalb" der Oberfläche liegenden Metallpartikel) nicht angegriffen werden.

Die Ätzmitteltemperatur, die Ätzdauer bzw. der erste Zeitraum und das Gemisch (Anteil des Ätzmittels in dem zuschlagstoffaktiven Gemisch) werden vorzugsweise in Abhängigkeit von
- dem Zuschlagstoff Z und dem Polymer P,
- gegebenenfalls von der Wandstärke des Formteils,
- der Größe des Formteils, d.h. von der Fläche der zu behandelnden Oberfläche,
- der Größe der Partikel des Zuschlagstoffes (jedenfalls jener Partikel, die an der Oberfläche des Formteils vorhanden sind),
- dem relativen Anteil des Zuschlagstoffes (im Verhältnis zum Polymeranteil) in der Oberfläche des Formteils,
- der ursprünglichen und/oder von der gewünschten Oberflächenbeschaffenheit (zum Beispiel Porosität und/oder Rauheit) des Formteils, und/oder
- den nach dem Ätzvorgang entstehenden (gewünschten) Vertiefungen bzw. Hohlräume H
gewählt, wobei eine oder mehrere dieser Eigenschaften berücksichtigt werden können.

Die Zusammensetzung des Ätzmittels, die Konzentration des Ätzmittels in dem zuschlagstoffaktiven Gemisch, die Zusammensetzung des Formteils (Zusammensetzung des Polymers P, Zusammensetzung des Zuschlagstoffes und Anteil des Zuschlagstoffes in dem Polymer), die Dauer des Kontakts mit dem Formteil, die Temperatur, der Druck, sowie weitere Faktoren, die die Diffusion und/oder die Aktivität des Ätzmittels beeinflussen, bestimmen die Stärke bzw. Intensität des Ätzvorgangs.

Vorteilhaft kann es sein, wenn das Formteil während des Ätzschrittes in dem Ätzmittel bzw. in dem zuschlagstoffaktiven Gemisch umgewälzt, vorzugsweise ständig umgewälzt wird. Es hat sich nämlich gezeigt, dass Gase, die sich bei der Reaktion zwischen dem Zuschlagstoff und dem Ätzmittel bilden können, eine Art Schutzschicht für die Oberfläche des Formteils bilden können, die den Ätzvorgang negativ beeinflussen können (etwa zu einer inhomogen geätzten Oberfläche führen können). Das (ständige) Umwälzen des Formteils in dem Ätzmittel bzw. in dem zuschlagstoffaktiven Gemisch bzw. des Ätzmittels selbst bewirkt, dass diese Gase von der Oberfläche des Formteils entfernt werden und die Oberfläche während des gesamten Ätzvorganges benetzt bleibt. Alternativ kann die Homogenität des Ätzvorgangs durch anderweitige Behandlung, z.B. mit Ultraschall sichergestellt werden.

Die Prozessparameter der Ätzschrittes sind vorzugsweise so zu wählen, dass die Vertiefungen H ausgebildet werden, die ausreichen, um diese im nachfolgenden Strahlschritt mit dem umliegenden Polymer zu überdecken.

### Strahlschritt

In dem Strahlschritt wird die Oberfläche des Formteils mit einem Strahlmittel gestrahlt. Das Ergebnis des Strahlschrittes in Abbildung (c) der Fig. 5 gezeigt.

Durch das Strahlen der Oberfläche werden die an der Oberfläche überstehenden, das Polymer aufweisenden Oberflächenabschnitte nivelliert, wodurch das Polymer teilweise auch in die umliegenden Vertiefungen H verdrängt bzw. "geschoben" wird. Das in die umliegenden Vertiefungen H verdrängte Polymer deckt dadurch die in den jeweiligen Vertiefungen vorhandenen Zuschlagstoffe ab, sodass durch das Strahlen der Oberfläche im Wesentlichen eine geschlossene und weitgehend ebene bzw. glatte Oberfläche aus dem Polymer gebildet wird. Gleichzeitig wird dadurch auch ein Verdichten der Oberfläche erreicht, wodurch eine nahezu porenfreie Oberfläche entsteht.

Vorteilhaft ist es hierbei, wenn als Strahlmittel Kunststoffkugeln verwendet werden, die einen etwas geringeren oder gleichen Härtegrad aufweisen als bzw. wie das Polymer. Dadurch kann ein Nivellieren der Oberfläche gewährleistet werden, ohne dass die Oberfläche beschädigt oder Material von der Oberfläche abgetragen wird. Es können auch metallgefüllte bzw. glasgefüllte Kunststoffstrahlmittel verwendet werden, wobei der Kunststoffmantel der metallgefüllten bzw. glasgefüllten Kunststoffstrahlmittel einen etwas geringeren oder gleichen Härtegrad aufweist als bzw. wie das Polymer.

Das Strahlen der Oberfläche mit Kunststoffkugeln hat zusätzlich zum Verdichten der Oberfläche den Vorteil, dass die das Polymer aufweisenden Oberflächenabschnitte homogenisiert werden, d.h. die Rauheit um einen gewissen Grad reduziert wird, wodurch sich die Dauer des Strahlschrittes reduzieren lässt.

Die effektive Rauigkeit der Polymeroberfläche hängt von der Dauer des Strahlvorganges ab. Bei einer längeren Dauer des Strahlvorganges kann eine glattere Oberfläche erzielt werden.

In einer Ausgestaltung der Erfindung kann es vorgesehen sein, den Strahlschritt bei einer erhöhten Temperatur durchzuführen. Dies hat den Vorteil, dass sich die das Polymer aufweisenden Oberflächenabschnitte mit dem Strahlmittel leichter und/oder schneller verformen lassen, sodass das Polymer auch leicht bzw. schneller in die umliegenden Vertiefungen H verdrängt werden kann.

### Beispiel:

Ein Formteil wird aus einem Aluminium-gefüllten Polyamid-12 (Alumide) im 3D-Druckverfahren hergestellt. Überschüssiges Druckmaterial wird von dem Formteil entfernt. Das Formteil weist eine raue Oberfläche auf.

Das Formteil wird anschließend geätzt. Das Formteil wird hierfür in eine wässrige Lösung von 30% Natronlauge gelegt und unter ständigem Rühren für zwei Stunden auf etwa 50°C erhitzt. Anschließen wird das Formteil aus der Lösung genommen, abgekühlt, abgewaschen und getrocknet. Das Formteil weist nun an den Stellen Vertiefungen in der Oberfläche auf an denen sich das Aluminiumpulver befunden hat.

Anschließend wird das Formteil einem Lösungsmitteldampf ausgesetzt (Glättschritt), in dem Polyamid-12 löslich ist, das Aluminiumpulver aber unlöslich ist. In diesem Beispiel wird hierfür Benzylalkohol verwendet. Der Lösungsmitteldampf bewirkt, dass das Polyamid-12 an der Oberfläche des Formteils angelöst wird und eine gelschichtartige Viskosität aufweist, die es dem angelösten Polymid-12 ermöglicht in die durch das Ätzen entstandenen Vertiefungen zu migrieren und so die Vertiefungen mit dem Polyamd-12 aufzufüllen. Beim Entfernen des Lösungsmittels im Vakuum erstarrt die angelöste Oberfläche wieder, das Formteil wird dabei von dem Lösungsmittel weitestgehend befreit. Die Oberfläche des Formteils ist nun glatt und weist nahezu keinerlei Poren auf. Sie ist wasserabweisend und wasserdicht.

## Patentansprüche

1. Verfahren zur Behandlung einer Oberfläche eines unter Verwendung eines mit zumindest einem Zuschlagstoff (Z) versehenen Polymers (P) hergestellten Formteils (10), wobei die Oberfläche des Formteils
- für einen ersten Zeitraum in Kontakt mit einem eine erste Temperatur aufweisenden zuschlagstoffaktiven Mittel gebracht wird,
wobei das zuschlagstoffaktive Mittel angepasst ist, während des Inkontaktbringens mit der Oberfläche den an der Oberfläche des Formteils vorhandenen Zuschlagstoff zumindest teilweise von der Oberfläche zu entfernen.

2. Verfahren nach Anspruch 1, wobei die Oberfläche des Formteils
- für einen zweiten Zeitraum in Kontakt mit einem eine zweite Temperatur aufweisenden polymeraktiven Mittel gebracht wird,
wobei das polymeraktive Mittel angepasst ist, während des Inkontaktbringens mit der Oberfläche das Polymer aufweisende Oberflächenbereiche zumindest teilweise anzulösen oder quellen zu lassen, und wobei die Oberfläche des Formteils durch das Inkontaktbringen mit dem zuschlagstoffaktiven Mittel und mit dem polymeraktiven Mittel zumindest abschnittsweise geglättet wird.

3. Verfahren nach einem der vorhergehenden Ansprüche, wobei das zuschlagstoffaktive Mittel angepasst ist, den an der Oberfläche des Formteils vorhandenen Zuschlagstoff zumindest anteilig chemisch umzuwandeln und/oder in Lösung zu bringen, wobei der chemisch umgewandelte und/oder in Lösung gebrachte Anteil des Zuschlagstoffes von der Oberfläche des Formteils entfernt wird.

4. Verfahren nach einem der vorhergehenden Ansprüche, wobei als zuschlagstoffaktives Mittel ein Ätzmittel verwendet wird.

5. Verfahren nach einem der vorhergehenden Ansprüche 2 bis 4, wobei als polymeraktives Mittel ein Lösungsmittel verwendet wird, das angepasst ist, die das Polymer aufweisenden Oberflächenbereiche der Oberfläche zumindest soweit anzulösen oder quellen zu lassen, dass das angelöste oder gequollene Polymer zumindest teilweise in jene Oberflächenbereiche migriert, in denen der an der Oberfläche des Formteils vorhandene Zuschlagstoff zumindest anteilig entfernt worden ist.

6. Verfahren nach einem der vorhergehenden Ansprüche, wobei
- das zuschlagstoffaktive Mittel so gewählt wird, dass das Polymer gegenüber dem zuschlagstoffaktiven Mittel stabiler ist als der Zuschlagstoff.

7. Verfahren nach einem der Ansprüche 2 bis 6, wobei
- das polymeraktive Mittel so gewählt wird, dass der Zuschlagstoff gegenüber dem polymeraktiven Mittel stabiler ist als das Polymer.

8. Verfahren nach einem der vorhergehenden Ansprüche, wobei das zuschlagstoffaktive Mittel als zuschlagstoffaktives Gemisch in Kontakt mit der Oberfläche gebracht wird, wobei das zuschlagstoffaktive Gemisch mindestens ein Trägermedium, vorzugsweise ein Lösungsmittel, und das zuschlagstoffaktive Mittel umfasst,
wobei vorzugsweise
- das Lösungsmittel vorzugsweise Wasser umfasst und das Ätzmittel zumindest teilweise in die Lösung geht, und/oder
- der Anteil des zuschlagstoffaktiven Mittels in dem zuschlagstoffaktiven Gemisch vorzugsweise 1 bis 90 Gew.-%, bevorzugt 10 bis 60 Gew.-%, jeweils bezogen auf das Gesamtgewicht des zuschlagstoffaktiven Gemischs, beträgt.

9. Verfahren nach einem der vorhergehenden Ansprüche, wobei nach dem Inkontaktbringen des zuschlagstoffaktiven Mittels mit der Oberfläche das Formteil bei einer vorbestimmten Temperatur, vorzugsweise bei einer Temperatur zwischen 10°C und 180°C, besonders bevorzugt bei einer Temperatur zwischen 90°C und 110°C, getrocknet wird, wobei das Formteil vorzugsweise unterhalb des Atmosphärendrucks, besonders bevorzugt in einem weitgehenden Vakuum, getrocknet wird, und/oder
wobei nach dem Inkontaktbringen des polymeraktiven Mittels mit der Oberfläche das Formteil bei einer vorbestimmten Temperatur, vorzugsweise bei einer Temperatur zwischen 10°C und 180°C, besonders bevorzugt bei einer Temperatur zwischen 20°C und 100°C, getrocknet wird, wobei das Formteil vorzugsweise unterhalb des Atmosphärendrucks, besonders bevorzugt in einem weitgehenden Vakuum, getrocknet wird,
wobei die Temperatur für das Trocknen so gewählt wird, dass sie unterhalb der Schmelztemperatur, vorzugweise unterhalb der Erweichungstemperatur des Polymers liegt.

10. Verfahren nach dem vorhergehenden Anspruch, wobei die Kombination aus Druck und Temperatur ein Entweichen des polymeraktiven Mittels aus den angelösten Polymer aufweisenden Oberflächenbereichen beschleunigt, und/oder
wobei der erste Zeitraum zwischen 1 Sekunde und 10 Stunden, vorzugsweise zwischen 1 Stunde und 4 Stunden beträgt, und/oder
wobei das Inkontaktbringen des zuschlagstoffaktiven Mittels mit der Oberfläche mehrfach wiederholt wird und/oder wobei das Inkontaktbringen des polymeraktiven Mittels mit der Oberfläche mehrfach wiederholt wird.

11. Verfahren nach einem der vorhergehenden Ansprüche 2 bis 15, wobei
- die zweite Temperatur unterhalb der Schmelztemperatur des Polymers, besonders bevorzugt unter der Erweichungstemperatur des Polymers liegt, und/oder
- der zweite Zeitraum zwischen 1 Sekunde und 10 Stunden, vorzugsweise zwischen 5 Sekunden und 1 Stunde beträgt.

12. Verfahren nach einem der vorhergehenden Ansprüche, wobei das Inkontaktbringen des zuschlagstoffaktiven Mittels mit der Oberfläche des Formteils
- ein Eintauchen des Formteils in ein das zuschlagstoffaktive Mittel aufweisendes Bad,
- ein Bedampfen der Oberfläche des Formteils mit dem zuschlagstoffaktiven Mittel,
- ein Aufbringen des zuschlagstoffaktiven Mittels in gasförmiger Form auf die Oberfläche des Formteils,
- ein Besprühen der Oberfläche des Formteils mit dem zuschlagstoffaktiven Mittel, und
- Kombination hiervon,
umfasst,
wobei beim Eintauchen des Formteils in das das zuschlagstoffaktive Mittel aufweisende Bad
- das Formteil in dem Bad bewegt wird und/oder
- das Bad umgewälzt wird.
und/oder wobei das polymeraktive Mittel im gasförmigen oder flüssigen Zustand in Kontakt mit der Oberfläche des Formteils gebracht wird.

13. Verfahren nach einem der Ansprüche 5 bis 12, wobei das Lösungsmittel eine ähnliche oder gleich Polarität aufweist wie das Polymer, und/oder wobei das Lösungsmittel ausgewählt wird aus der Klasse der destillierbaren Lösungsmittel.

14. Verfahren nach einem der vorhergehenden Ansprüche, wobei das zuschlagstoffaktive Mittel ausgewählt wird aus der Gruppe umfassend organische Säuren, organische Basen, organische Amine, organische Hydroxide, organische Salze, amphotere Verbindungen, Mineralsäuren, anorganische Säuren, anorganische Basen, anorganische Salze, Ammoniak, Alkalimetallcarbonate, Alkalimetalldicarbonate, Alkalimetallhypochlorite, Alkalimetallhydroxide, Erdalkalimetallhydroxide, Ammoniumhydroxide, und Kombination oder Gemische hiervon

15. Verfahren nach einem der vorhergehenden Ansprüche 2 bis 14, wobei das polymeraktive Mittel ausgewählt wird
- aus der Gruppe umfassend Alkane, Alkene, Aromate, Carbonsäuren, Ester, Ether, Terpene, Ketone, Aldehyde, Lactone, Lactame, Nitrile, Nitroverbindungen, tertiäre Carbonsäureamide, Harnstoffderivate, Sulfoxide, Sulfone, Kohlensäureester, Wasser, anorganischen Säuren, Alkohole, Amine, Carbonsäuren, primäre Amide, sekundäre Amide, Acetale, Halbacetale, halogenhaltige Kohlenwasserstoffe, und Kombinationen oder Mischungen hiervon, und/oder
- aus der Gruppe Benzylalkohol, Limone, 1,8-Cineol, Ameisensäure, Dichlormethan, Dimethylsulfoxid, Isopropanol, Acetophenon, Formaldehyd-Dibutyl-Acetal, Dichloressigsäure, Schwefelsäure, Dimethylformamid, 1,1,1,3,3,3-Hexafluor-2-propanol, m-Cresol, 2-Methyl-Tetrahydrofuran, und Kombinationen oder Mischungen hiervon.

16. Verfahren nach einem der vorhergehenden Ansprüche, wobei zum Herstellen des Formteils ein Polymer verwendet wird, das ausgewählt wird aus der Gruppe umfassend thermoplastische Elastomere, thermoplastische Elastomere auf Urethan-Basis, thermoplastische Polyamidelastomere, thermoplastische Copolyesterelastomere, thermoplastische Elastomere auf Olefin-Basis, thermoplastische Styrol-Blockcopolymere, Polyoxymethylene, Polyethylenterephthalate, Polyethylenterephthalat-Glycole, Polyetherblockamide, Polyethylenfuranoate, Polyurethane, Acryl-Nitril-Butadien-Styrole, thermoplastische Polyamide, Photopolymere, Triblock-Polymere aus Polystyrol und Poly(ethylenoxid)-Blöcke, Polyamide, Polyester, Polyolefine, Polyacrylate, Polyvinylamine, Polyacrylamide, Polymethyl(meth)acrylate, Polyether, Polycarbonate, Polylactide, Polyethersulfone, Polysulfone, Polyphenylsulfone, Polyimide, Polyetherimide, Polyketone, Polyetherketone, Styrolpolymere, Styrolblockpolymere, Acrylnitrilstyrolacrylate, Copolymere, und Blends oder Mischungen hiervon.

17. Verfahren nach einem der vorhergehenden Ansprüche, wobei zum Herstellen des Formteils ein Zuschlagstoff verwendet wird, der ausgewählt wird aus der Gruppe umfassend natürliche und synthetische Polymere, anorganische Füllstoffe, Keramiken, Talke, Quarze, Metalle, Oxide, Carbide, Nitride, Boride, Stahl, Legierungen mit Metallen und Nichtmetallen, Gläser, Mineralien, Farbstoffe, Gummis, Holz, Graphit, Aktivkohle, Carbon, Farbstoffe, und Mischungen hiervon, wobei das Metall vorzugsweise ausgewählt aus der Gruppe umfassend Titan, Aluminium, Kupfer, Nickel, Kobalt, Eisen, Molybdän, Magnesium, Tantal, Chrom, Wolfram, Zink, Gold, Silber, Zinn, Platinum, Zirkonium, Legierungen hiervon mit anderen Metallen und Nichtmetallen, beispielsweise Bronze, und Kombinationen hiervon.

18. Formteil, das unter Verwendung eines mit zumindest einem Zuschlagstoff (Z) versehenen Polymers (P) in einem additiven Fertigungsverfahren hergestellt wird und dessen Oberfläche mit einem Verfahren gemäß einem der vorhergehenden Ansprüche bearbeitet worden ist.
